# EUROPÄISCHE PATENTSCHRIFT

(11) **EP 4 088 375 B1**
(45) Veröffentlichungstag und Bekanntmachung des Hinweises auf die Patenterteilung: **24.05.2023**
(21) Anmeldenummer: 21707199.2
(22) Anmeldetag: 18.02.2021
(51) Int. Cl.: H02P 3/08, H02P 29/024

(54) **SICHERHEITSMODUL FÜR EINE GESICHERTE ANTRIEBSSTEUERUNG EINES ANTRIEBSSYSTEMS IN EINEM AUTOMATISIERUNGSSYSTEM, ANTRIEBSSYSTEM UND AUTOMATISIERUNGSSYSTEM**
SAFETY MODULE FOR SAFE DRIVE CONTROL OF A DRIVE SYSTEM IN AN AUTOMATION SYSTEM, DRIVE SYSTEM AND AUTOMATION SYSTEM
MODULE DE SÉCURITÉ POUR COMMANDE D'ENTRAÎNEMENT SÛRE D'UN SYSTÈME D'ENTRAÎNEMENT DANS UN SYSTÈME D'AUTOMATISATION, SYSTÈME D'ENTRAÎNEMENT ET SYSTÈME D'AUTOMATISATION

(30) Priorität: 18.02.2020 DE 102020104230
(43) Veröffentlichungstag der Anmeldung: 16.11.2022
(73) Patentinhaber: Beckhoff Automation GmbH, 33415 Verl (DE)
(72) Erfinder: POHL, Christopher, 33415 Verl (DE); KATHÖFER, Andreas, 33397 Rietberg (DE); SIEWEKE, Frank, 33818 Leopoldshöhe (DE); ZUTZ, Robert, 33415 Verl (DE)
(74) Vertreter: Patentanwaltskanzlei WILHELM & BECK
(86) Internationale Anmeldenummer: PCT/EP2021/053974
(87) Internationale Veröffentlichungsnummer: WO 2021/165371

(56) Entgegenhaltungen:
- EP-A1- 3 023 846
- EP-A1- 3 388 906
- EP-A2- 2 367 086
- EP-A2- 2 639 556
- WO-A1-2019/239753
- US-B2- 7 868 619

## Beschreibung

Die Erfindung betrifft ein Sicherheitsmodul für eine gesicherte Antriebssteuerung eines Antriebssystems in einem Automatisierungssystem. Die Erfindung betrifft ferner ein Antriebssystem mit einem Sicherheitsmodul. Die Erfindung betrifft ferner ein Automatisierungssystem mit einem Antriebssystem mit einem Sicherheitsmodul.

Diese Patentanmeldung beansprucht die Priorität der deutschen Patentanmeldung DE 10 2020 104 230.2 vom 18. Februar 2020, deren Offenbarungsgehalt hiermit durch Rückbezug aufgenommen wird.

Zum Steuern von Antriebssystemen werden für gewöhnlich Encoder verwendet, die dazu dienen, ein elektrisches Signal (Encodersignal) zu erzeugen, das eine aktuelle Position einer Motoreinheit des Antriebssystems kodiert. Solche Encoder können auch als Kodierer bezeichnet werden. Die mechanische Bewegung kann dabei beispielsweise eine translatorische oder eine rotatorische Bewegung sein.

Es sind absolut messende Encoder bekannt, die elektrische Signale erzeugen, die einen Absolutwert einer Position angeben. Daneben existieren auch inkremental arbeitende Encoder, die Signale erzeugen, die eine Veränderung einer Position gegenüber einer vorherigen Position angeben.

Anhand der Positionsangaben der Motoreinheit durch den Encoder ist eine Ansteuerung der Motoreinheit durch eine Antriebseinheit ermöglicht.

Eine Datenkommunikation zwischen einer Antriebseinheit und der Encoder-Einheit des Antriebssystems wird im Stand der Technik für gewöhnlich über Encoderschnittstellen realisiert, die gemäß entsprechenden Encoder-Protokollen einen Datenaustauch zwischen Antriebseinheiten und Encoder-Einheiten realisieren. Encoder-Protokolle sind hierbei auf eine Datenkommunikation zwischen Antriebseinheiten und Encoder-Einheiten spezialisierte Datenkommunikationsprotokolle, die für einen hochfrequenten Datenaustausch von Encoder-Daten mit Taktzeiten im Mikrosekundenbereich eingerichtet sind.

Für die Verwendung von Antriebssystemen in Automatisierungssystemen müssen die Antriebssysteme gewisse Vorgaben in Bezug auf die Sicherheit der verwendeten Antriebssysteme erfüllen. So sind beispielsweise für elektrische Antriebe in Automatisierungssystemen unter anderem in der Norm IEC 61800-5-2:2016 bestimmte sicherheitsrelevante Funktionen wie Safe Torque Off (STO), Safe Stop 1 (SS1), Safe Stop 2 (SS2), Safe Operation Stop (SOS), Safe Limited Speed (SLS), Save Speed Monitor (SSM), Safe Speed Range (SSR), Safe Limited Position (SLP), Safe Position (SP), Safe Direction (SD) oder Safe Brake Control, Safe Brake Test (SBC, SBT) definiert, die einen sicheren Betrieb von elektrischen Antriebseinheiten gewährleisten und Schäden an Personen und Maschinen verhindern sollen. In Abhängigkeit der Verwendung der Antriebseinheiten können diese verschiedenen Sicherheitsanforderungsstufen zugeordnet und an diese weniger, mehr und gegebenenfalls abweichende Sicherheitsanforderungen gestellt sein.

Sicherheitsfunktionen oder sicherheitsrelevante Funktionen sind Funktionen von Antriebssystemen. Sicherheitsanforderungen sind Anforderungen, die an Antriebssysteme gestellt werden, um gewisse Vorgaben zu erfüllen. Die Anforderungen können umfassen, dass die jeweiligen Antriebssysteme eine bestimmte Anzahl verschiedener Sicherheitsfunktionen aufweisen. Dies kann davon abhängig gemacht werden, in welchen Bereichen die betreffenden Antriebssysteme zum Einsatz kommen. Je nach Art und Einsatz der Antriebssysteme können diese entsprechenden Sicherheitsanforderungsstufen zugeordnet werden, die sich jeweils in den gestellten Sicherheitsanforderungen unterscheiden.

Im Stand der Technik sind Sicherheitsencoder beziehungsweise Sicherheits-Encoder-schnittstellen, wie beispielsweise Hiperface DSL Safety und EnDat 2.2 Safety, bekannt, die einen sicheren Betrieb von Antriebssystemen und ein Erfüllen entsprechender Anforderungen in Bezug auf die Sicherheit ermöglichen.

Derartige Sicherheitsencoder beziehungsweise Sicherheits-Encoderschnittstellen stellen einen umfassend sicheren Betrieb entsprechender Antriebssysteme bereit und gewährleisten verlässliche Positionsangaben der jeweiligen Motorsysteme und gesicherte Datenübertragungskanäle für eine zuverlässige Datenübertragung. Sicherheits-Encoderschnittstellen sind jedoch technisch komplex und kostspielig und somit für gewisse Anwendungen unattraktiv. Darüber hinaus ist eine Nachrüstung von Antriebskomponenten, bei denen derartige Sicherheitskonzepte ursprünglich nicht vorgesehen waren, ebenfalls technisch aufwendig und kostspielig.

Sicherheitskonzepte sind die Konzepte, die für Automatisierungssysteme erstellt werden und umfassen, welche Anforderung in Bezug auf Sicherheit die jeweiligen Automatisierungssysteme zu erfüllen haben und durch welche Maßnahmen diese Anforderungen zu erfüllen sind.

Zusätzlich sind im Stand der Technik technisch einfache Sicherheitskonzepte, wie beispielsweise Safe Torque Off Module, bekannt, die in Antriebssysteme integrierbar sind und gewisse Sicherheitsanforderungen erfüllen können. Derartige Sicherheitskonzepte sind jedoch nur für einfache Sicherheitsanforderungen geeignet und sind nicht in der Lage, einen umfassend sicheren Betrieb von Antriebssystemen zu gewährleisten.

Aus der Druckschrift EP 2 367 086 A2 sind ein Servo-System, eine Servomotor-Steuerungs-Vorrichtung, eine Sicherheitseinheit und ein Verfahren zum Steuern eines Servo-Systems bekannt. Aus der Druckschrift EP 3 388 906 A1 sind ein Motorsteuerungssystem, eine Motorsteuerung und ein Verfahren zum Setzen einer Sicherheitsfunktion bekannt. Aus der Druckschrift EP 3 023 846 A1 ist ein elektromechanisches Antriebssystem bekannt. Aus der Druckschrift EP 2 639 556 A2 sind ein Drehencoder und ein Verfahren zum Detektieren von Anomalien eines Drehencoders bekannt. Aus der Druckschrift WO 2019/239753 A1 ist ein Diagnosegerät für Trennschaltungen bekannt.

Es besteht daher ein Bedarf für kompatible Sicherheitskonzepte, die einen umfassend sicheren Betrieb von Antriebssystemen ermöglichen und umfassende Sicherheitsanforderungen erfüllen, vergleichbar zu aus dem Stand der Technik bekannten Sicherheits-Encodern beziehungsweise Sicherheits-Encoderschnittstellen.

Es ist daher eine Aufgabe der Erfindung, ein Sicherheitsmodul bereitzustellen, das eine sichere Antriebssteuerung eines Antriebssystems in einem Automatisierungssystem ermöglicht. Eine weitere Aufgabe der Erfindung ist es, ein Antriebssystem mit einem Sicherheitsmodul bereitzustellen. Eine weitere Aufgabe der Erfindung ist es, ein Automatisierungssystem mit einem Antriebssystem mit einem Sicherheitsmodul bereitzustellen.

Die Aufgaben werden durch ein Sicherheitsmodul, ein Antriebssystem mit einem Sicherheitsmodul und durch ein Automatisierungssystem mit einem Antriebssystem mit einem Sicherheitsmodul gemäß den unabhängigen Ansprüchen gelöst. Bevorzugte Ausführungsformen sind in den abhängigen Ansprüchen angegeben.

Nach einem Aspekt der Erfindung wird ein Sicherheitsmodul für eine gesicherte Antriebssteuerung eines Antriebssystems in einem Automatisierungssystem bereitgestellt, wobei das Antriebssystem wenigstens eine Antriebseinheit, eine Encoder-Einheit und eine Motoreinheit aufweist, wobei das Sicherheitsmodul zwischen der Antriebseinheit, der Encoder-Einheit integrierbar und mit diesen über wenigstens eine Datenverbindung verbindbar ist, wobei das Sicherheitsmodul einen Protokollmaster, einen Protokollslave und eine Sicherheitslogik aufweist, die eingerichtet sind, mittels einer Datenkommunikation miteinander zu kommunizieren, wobei der Protokollmaster als eine Mastereinheit und der Protokollslave als eine Slaveeinheit eines Encoder-Protokolls einer Encoder-Schnittstelle ausgebildet sind, und wobei das Sicherheitsmodul eingerichtet ist:
von einem als Slave-Einheit des Encoder-Protokolls ausgebildeten Encoder-Protokollslave der Encoder-Einheit an einen als Master-Einheit des Encoder-Protokolls ausgebildeten Antriebsprotokollmaster der Antriebseinheit auf Basis des Encoder-Protokolls in entsprechenden Datenpaketen ausgesendete Encoder-Daten mittels des Protokollmasters zu empfangen;
die empfangenen Encoder-Daten vom Protokollmaster an die Sicherheitslogik und den Protokollslave weiterzuleiten;
die weitergeleiteten Encoder-Daten durch die Sicherheitslogik auf Übereinstimmung mit vorbestimmten Sicherheitskriterien in Bezug auf den Betrieb der Motoreinheit zu überprüfen;
die weitergeleiteten Encoder-Daten durch den Protokollslave auf Basis des Encoder-Protokolls in entsprechenden Datenpaketen an die Antriebseinheit auszusenden; und einen Stopp des Betriebs der Motoreinheit durch die Sicherheitslogik zu bewirken, falls durch die Sicherheitslogik die Encoder-Daten als nicht mit den vorbestimmten Sicherheitskriterien übereinstimmend erkannt werden, wobei die Datenkommunikation zwischen dem Encoder-Protokollslave der Encoder-Einheit und dem Protokollmasters des Sicherheitsmoduls und zwischen dem Protokollslave des Sicherheitsmoduls und dem Antriebsprotokollmaster der Antriebseinheit analog zu einer Datenkommunikation zwischen dem Encoder-Protokollslave der Encoder-Einheit und dem Antriebsprotokollmaster der Antriebseinheit ausgebildet ist.

Hierdurch wird der technische Vorteil erreicht, dass ein Sicherheitsmodul für eine gesicherte Antriebssteuerung eines Antriebssystems in einem Automatisierungssystem bereitgestellt werden kann, das in ein Antriebssystem integrierbar ist, das nicht mit einer Sicherheits-Encoderschnittstelle betrieben wird, wobei das Sicherheitsmodul eingerichtet ist, alle Anforderungen bestimmter Sicherheitsspezifikationen für entsprechende Antriebssysteme in Automatisierungssystemen zu erfüllen.

Durch den Protokollmaster und den Protokollslave des Sicherheitsmoduls ist das Sicherheitsmodul in ein Antriebssystem, insbesondere zwischen eine Antriebseinheit und eine Encoder-Einheit des Antriebssystems, integrierbar und eingerichtet, eine Datenkommunikation zwischen der Antriebseinheit und der Encoder-Einheit bereitzustellen.

Der Protokollmaster und der Protokollslave des Sicherheitsmoduls entsprechen hierbei einer Mastereinheit und einer Slave-Einheit eines Encoder-Protokolls beziehungsweise einer Encoder-Schnittstelle, mittels der eine Datenkommunikation zwischen der Antriebseinheit und der Encoder-Einheit des Antriebssystems realisiert ist. Der Protokollmaster des Sicherheitsmoduls ist eingerichtet, eine Datenkommunikation mit der Encoder-Einheit auf Basis des verwendeten Encoder-Protokolls beziehungsweise der verwendeten Encoder-Schnittstelle bereitzustellen. Der Encoder-Master ist ferner eingerichtet, dass für eine Datenkommunikation zwischen dem Encoder-Master und der Encoder-Einheit das Encoder-Protokoll beziehungsweise die Encoder-Schnittstelle, die zur Datenkommunikation zwischen der Encoder-Einheit und der Antriebseinheit des Antriebssystems verwendet wird, nicht abgeändert werden muss.

Aus Sicht der Encoder-Einheit ist somit eine Datenkommunikation zwischen der Encoder-Einheit und dem Protokollmaster des Sicherheitsmoduls identisch zu einer Datenkommunikation zwischen der Encoder-Einheit und der Antriebseinheit des Antriebssystems. Hierzu empfängt der Protokollmaster die von der Encoder-Einheit gemäß dem Encoder-Protokoll ausgesendeten Encoder-Daten und leitet diese an den Protokollslave des Sicherheitsmoduls weiter.

Der Protokollslave des Sicherheitsmoduls ist ausgebildet, die weitergeleiteten Encoder-Daten gemäß dem bestehenden Encoder-Protokoll an die Antriebseinheit zu übermitteln. Der Protokollslave ist hierbei eingerichtet, dass für eine Datenkommunikation zwischen dem Protokollslave und der Antriebseinheit das bestehende Encoder-Protokoll beziehungsweise die bestehende Encoder-Schnittstelle nicht abgeändert werden müssen. Aus Sicht der Antriebseinheit ist somit eine Datenkommunikation zwischen der Antriebseinheit und dem Protokollslave des Sicherheitsmoduls zu einer Datenkommunikation zwischen der Antriebseinheit und der Encoder-Einheit des Antriebssystems identisch.

Das Sicherheitsmodul kann somit in eine bestehende Datenverbindung zwischen einer Antriebseinheit und einer Encoder-Einheit eines Antriebssystems integriert werden, ohne dass hierzu eine Änderung eines bestehenden Encoder-Protokolls beziehungsweise einer bestehenden Encoder-Schnittstelle, mittels dem/der eine Datenkommunikation zwischen der Antriebseinheit und der Encoder-Einheit realisiert ist, vorgenommen werden muss.

Im Sinne der Anmeldung ist eine Datenverbindung eingerichtet, eine Datenkommunikation zwischen Kommunikationspartner bereitstellen. Eine Datenverbindung kann beispielsweise mittels einer Encoder-Schnittstelle realisiert sein. Alternativ kann eine Datenverbindung über eine Datenbusverbindung realisiert sein. Eine Datenverbindung kann eine rein datentechnische Verbindung sein. Alternativ kann eine Datenverbindung eine physikalische Komponente in Gestalt einer entsprechenden Verkabelung umfassen.

Eine Schnittstelle ist im Sinne der Anmeldung eine datentechnische Verbindung zwischen wenigstens zwei Datenkommunikationsteilenehmern, wobei die Schnittstelle eingerichtet ist, eine Datenkommunikation zwischen den wenigstens zwei Datenkommunikationsteilnehmern bereitzustellen.

Alternativ können auch verschiedene Encoder-Protokolle zur Datenkommunikation zwischen der Antriebseinheit und dem Sicherheitsmodul und der Encoder-Einheit und dem Sicherheitsmodul verwendet werden.

So können der Protokollmaster des Sicherheitsmoduls mit der Encoder-Einheit auf Basis eines Encoder-Protokolls beziehungsweise auf Basis einer Encoder-Schnittstelle und der Protokollslave des Sicherheitsmoduls mit der Antriebseinheit auf Basis eines weiteren Encoder-Protokolls beziehungsweise auf Basis einer weiteren Encoder-Schnittstelle kommunizieren.

Über die Sicherheitslogik des Sicherheitsmoduls können von der Encoder-Einheit ausgesendete Encoder-Daten in Bezug auf vorbestimmte Sicherheitskriterien überprüft werden. Bei Erkennen von Verstößen der von der Encoder-Einheit ausgesendeten Encoder-Daten zu den vorbestimmten Sicherheitskriterien kann die Sicherheitslogik des Sicherheitsmoduls einen Stopp des Betriebs der Motoreinheit des Antriebssystems bewirken. Die Sicherheitslogik ist dabei derart eingerichtet, dass sämtliche Anforderungen von Sicherheitsspezifikationen bezüglich des jeweiligen Antriebstyps des Antriebssystems erfüllt werden können.

Das Sicherheitsmodul ermöglicht somit ein Aufrüsten eines bestehenden Encoder-Protokolls beziehungsweise einer bestehenden Encoder-Schnittstelle zu einem Sicherheitsencoderprotokoll beziehungsweise einer Sicherheitsencoderschnittstelle, das/die in der Lage ist, alle Anforderungen jeweiliger Sicherheitsspezifikationen bezüglich entsprechender Antriebstypen zu erfüllen, ohne dass hierzu eine Modifikation der Komponenten des Antriebssystems beziehungsweise des bestehenden Encoder-Protokolls beziehungsweise der bestehenden Encoder-Schnittstelle vorgenommen werden müssten.

Das erfindungsgemäße Sicherheitsmodul ermöglicht ferner ein Aufrüsten eines bestehenden Encoder-Protokolls beziehungsweise einer bestehenden Encoder-Schnittstelle zu einem Sicherheitsencoderprotokoll beziehungsweise zu einer Sicherheitsencoderschnittstelle durch die Integration einer Hardwarekomponente, in Form des erfindungsgemäßen Sicherheitsmoduls, in ein bestehendes Antriebssystem.

Nach einer Ausführungsform ist das Sicherheitsmodul ferner eingerichtet, durch den Protokollmaster Aufforderungen zum Aussenden von Encoder-Daten an die Encoder-Einheit auszusenden.

Hierdurch wird der technische Vorteil erreicht, dass eine effektive und effiziente Datenkommunikation zwischen dem Sicherheitsmodul und der Encoder-Einheit des Antriebssystems bereitgestellt werden kann. Durch das Aussenden von Aufforderungen zum Aussenden von Encoder-Daten durch den Protokollmaster des Sicherheitsmoduls an die Encoder-Einheit kann ein Aussenden entsprechender Encoder-Daten durch die Encoder-Einheit an das Sicherheitsmodul beziehungsweise an die Antriebseinheit des Antriebssystems initiiert werden. Der Protokollmaster des Sicherheitsmoduls ist hierbei eingerichtet, eine Datenkommunikation mit der Encoder-Einheit einzuleiten, die identisch zu einer Datenkommunikation zwischen der Antriebseinheit und der Encoder-Einheit ist. Der Protokollmaster ist hierzu eingerichtet, Aufforderungen auszusenden, die zu Aufforderungen identisch sind, die die Antriebseinheit zur Initiierung einer Datenkommunikation an die Encoder-Einheit gemäß dem bestehenden Encoder-Protokoll beziehungsweise der bestehenden Encoder-Schnittstelle aussenden würde.

Aufforderungen sind im Sinne der Anmeldung den jeweilig verwendeten Encoder-Protokollen entsprechende Anfragen oder Befehle an die Encoder-Einheit entsprechende Funktionen auszuführen. Dies kann unter anderem das Aussenden von Encoder-Daten umfassen.

Encoder-Daten sind im Sinne der Anmeldung Daten der Encoder-Einheit und können neben Positionsdaten der Motoreinheit weitere Parameterdaten der Antriebseinheit umfassen. Alternativ können Encoder-Daten Informationen eines elektronischen Datenblatts des Encoders beziehungsweise Informationen bezüglich des Encoders und/oder des Motorsystems umfassen. Parameterdaten können beispielsweise Temperaturdaten, Druckdaten und/oder weitere Daten umfassen, die Zustandsaussagen den Zustand der Motoreinheit betreffend erlauben.

Nach einer Ausführungsform ist das Sicherheitsmodul ferner eingerichtet, durch die Antriebseinheit an die Encoder-Einheit ausgesendete Aufforderungen zum Aussenden von Encoder-Daten durch den Protokollslave zu empfangen; und den Aufforderungen entsprechende Encoder-Daten durch den Protokollslave an die Antriebseinheit auszusenden.

Hierdurch wird der technische Vorteil erreicht, dass eine effektive und effiziente Datenkommunikation zwischen der Antriebseinheit und dem Sicherheitsmodul bereitgestellt werden kann. Hierzu ist der Protokollslave eingerichtet, von der Antriebseinheit ausgesendete Aufforderungen zum Aussenden von Encoder-Daten zu empfangen, und das Sicherheitsmodul ist eingerichtet, den Aufforderungen entsprechende Encoder-Daten durch den Protokollslave an die Antriebseinheit auszusenden. Der Protokollslave ist hierbei eingerichtet, eine Datenkommunikation mit der Antriebseinheit durchzuführen, die identisch ist zu einer Datenkommunikation zwischen der Antriebseinheit und der Encoder-Einheit. Die von der Antriebseinheit ausgesendeten Aufforderungen entsprechen dem bestehenden Encoder-Protokoll beziehungsweise der bestehenden Encoder-Schnittstelle und sind identisch zu Aufforderungen, die die Antriebseinheit an die Encoder-Einheit aussendet, um diese zum Aussenden entsprechender Encoder-Daten anzuregen.

Durch das Bereitstellen der entsprechenden Encoder-Daten durch das Sicherheitsmodul an die Antriebseinheit kann eine umfassende Datenkommunikation zwischen der Antriebseinheit und der Encoder-Einheit über das Sicherheitsmodul gewährleistet werden, bei der auf Basis des bestehenden Encoder-Protokolls beziehungsweise der bestehenden Encoder-Schnittstelle beziehungsweise auf Basis der bestehenden Encoder-Protokolle beziehungsweise der bestehenden Encoder-Schnittstellen zur Steuerung der Motoreinheit durch die Antriebseinheit entsprechende Encoder-Daten der Encoder-Einheit zwischen der Antriebseinheit und der Encoder-Einheit ausgetauscht werden.

Hierzu kann der Protokollslave die von der Antriebseinheit ausgesendeten Aufforderungen empfangen und an den Protokollmaster weiterleiten, so dass der Protokollmaster entsprechende Aufforderungen an die Encoder-Einheit aussenden kann und die Encoder-Einheit zum Aussenden entsprechender Encoder-Daten antreiben kann.

Nach einer Ausführungsform umfasst das Sicherheitsmodul ferner einen Encoder-Emulator, wobei der Encoder-Emulator eingerichtet ist, simulierte Encoder-Daten zu generieren, und wobei die simulierten Encoder-Daten einer Simulation der Encoder-Daten der Encoder-Einheit entsprechen.

Hierdurch wird der technische Vorteil erreicht, dass ein flexibel und breit einsetzbares Sicherheitsmodul bereitgestellt werden kann. Durch das Generieren simulierter Encoder-Daten, die einer Simulation der Encoder-Daten der Encoder-Einheit entsprechen, ist das Sicherheitsmodul in der Lage, eigenständig Encoder-Daten bereitzustellen. Hierdurch kann insbesondere der technische Vorteil erreicht werden, dass der Antriebseinheit unmittelbar auf Aufforderungen zum Aussenden von Encoder-Daten durch das Sicherheitsmodul entsprechende Encoder-Daten bereitgestellt werden können, auch für den Fall, dass ein Weiterleiten der von der Antriebseinheit ausgesendeten Aufforderung durch das Sicherheitsmodul an die Encoder-Einheit und ein entsprechendes Aussenden von Encoder-Daten durch die Encoder-Einheit zu einer Verzögerung des Bereitstellens der Encoder-Daten durch das Sicherheitsmodul an die Antriebseinheit und folglich zu einer Fehlermeldung aufgrund des verzögerten Bereitstellens der angeforderten Encoder-Daten durch die Antriebseinheit führen würde.

Durch das Bereitstellen simulierter Encoder-Daten durch das Sicherheitsmodul an die Antriebseinheit kann eine entsprechende Fehlermeldung der Antriebseinheit aufgrund verzögerten Bereitstellens angeforderter Encoder-Daten verhindert werden. Somit kann gewährleistet werden, dass trotz Integration des Sicherheitsmoduls in das Antriebssystem sowohl für die Antriebseinheit als auch für die Encoder-Einheit eine Datenkommunikation zwischen der Antriebseinheit und der Encoder-Einheit unverändert durchführbar ist.

Weder für die Antriebseinheit noch für die Encoder-Einheit ist das in das Antriebssystem integrierte Sicherheitsmodul identifizierbar und für die Antriebseinheit stellt sich eine Datenkommunikation mit dem Sicherheitsmodul als identisch zu einer Datenkommunikation mit einer Sicherheits-Encoder-Einheit inclusive einer Sicherheits-Encoder-Schnittstelle dar und für die Encoder-Einheit stellt sich analog eine Datenkommunikation mit dem Sicherheitsmodul als identisch zu einer Datenkommunikation mit der Antriebseinheit über eine entsprechende Sicherheits-Encoder-Schnittstelle dar.

Nach einer Ausführungsform umfasst das Sicherheitsmodul ferner eine Speichereinheit, und wobei das Sicherheitsmodul ferner eingerichtet ist, durch den Protokollmaster empfangene Encoder-Daten der Encoder-Einheit und/oder simulierte Encoder-Daten des Encoder-Emulators in der Speichereinheit zu speichern.

Hierdurch wird der technische Vorteil erreicht, dass eine effektive und effiziente Datenkommunikation zwischen dem Sicherheitsmodul und der Antriebseinheit beziehungsweise der Encoder-Einheit erzielt werden kann. Durch das Speichern von Encoder-Daten der Encoder-Einheit beziehungsweise von simulierten Encoder-Daten des Encoder-Emulators in der Speichereinheit des Sicherheitsmoduls ist gewährleistet, dass bei entsprechenden Aufforderungen zum Aussenden von Encoder-Daten durch die Antriebseinheit auf entsprechende Encoder-Daten beziehungsweise simulierte Encoder-Daten, die in der Speichereinheit abgelegt sind, zugegriffen werden kann und diese durch das Sicherheitsmodul der Antriebseinheit bereitgestellt werden können.

Hierdurch können insbesondere für den Fall, dass entsprechendes Weiterleiten der Aufforderungen der Antriebseinheit an die Encoder-Einheit und das Aussenden entsprechender Encoder-Daten durch die Encoder-Einheit zu Verzögerungen im Bereitstellen entsprechender Encoder-Daten durch das Sicherheitsmodul an die Antriebseinheit führen würden, durch den Zugriff der in der Speichereinheit gespeicherten Encoder-Daten durch das Sicherheitsmodul der Antriebseinheit reelle Encoder-Daten der Encoder-Einheit bereitgestellt werden. Dieses ist insbesondere möglich, wenn entsprechend abgefragte Encoder-Daten der Encoder-Einheit lediglich eine geringe zeitliche Varianz aufweisen, so dass zeitlich frühere Encoder-Daten, die in der Speichereinheit des Sicherheitsmoduls gespeichert sind, lediglich geringe oder gar keine Abweichungen zu aktuellen Encoder-Daten der Encoder-Einheit aufweisen.

Analog können durch den Encoder-Emulator gemäß entsprechenden Simulationsmodellen simulierte Encoder-Daten generiert werden, die zu erwartenden Encoder-Daten der Encoder-Einheit entsprechen, und diese in der Speichereinheit abgelegt werden. Insbesondere bei gut durch entsprechende Simulationsmodelle abgedeckte zeitliche Varianzen der Encoder-Daten der Encoder-Einheit können somit der Antriebseinheit durch das Sicherheitsmodul unverzüglich zuverlässige Encoder-Daten bereitgestellt werden. Durch die Speichereinheit kann eine Generierung simulierter Encoder-Daten durch den Encoder-Emulator zu Zeiten durchgeführt werden, zu denen keine Kollisionen mit anderen Aufgaben des Sicherheitsmoduls zu befürchten sind. Hierdurch ist eine effektive und effiziente Aufgabenverarbeitung des Sicherheitsmoduls ermöglicht.

Nach einer Ausführungsform sind die durch den Protokollslave den Aufforderungen entsprechend ausgesendeten Encoder-Daten in der Speichereinheit gespeichert, und/oder wobei die den Aufforderungen entsprechend ausgesendeten Encoder-Daten sind simulierte Encoder-Daten des Encoder-Emulators.

Hierdurch wird der technische Vorteil erreicht, dass der Antriebseinheit nach Aussenden entsprechender Aufforderungen zum Aussenden von Encoder-Daten unmittelbar entsprechende Encoder-Daten durch das Sicherheitsmodul bereitgestellt werden können. Insbesondere für den Fall, dass ein Weiterleiten der von der Antriebseinheit ausgesendeten Aufforderungen durch das Sicherheitsmodul an die Encoder-Einheit und das entsprechende Aussenden der Encoder-Daten durch die Encoder-Einheit zu einer Verzögerung in der Bereitstellung der Encoder-Daten durch das Sicherheitsmodul an die Antriebseinheit führen würde, kann durch den Zugriff auf die in der Speichereinheit gespeicherten Encoder-Daten beziehungsweise simulierten Encoder-Daten eine fehlerfreie Datenkommunikation zwischen der Antriebseinheit und dem Sicherheitsmodul erreicht werden.

Nach einer Ausführungsform ist das Sicherheitsmodul ferner eingerichtet, die empfangenen Aufforderungen zum Aussenden von Encoder-Daten durch den Protokollslave an den Protokollmaster weiterzuleiten; und
die weitergeleiteten Aufforderungen durch den Protokollmaster an die Encoder-Einheit auszusenden.

Hierdurch wird der technische Vorteil erreicht, dass eine effektive und effiziente Datenkommunikation zwischen der Antriebseinheit und der Encoder-Einheit durch das Sicherheitsmodul bereitgestellt werden kann. Durch das Weiterleiten der von der Antriebseinheit ausgesendeten Aufforderungen zum Aussenden von Encoder-Daten durch das Sicherheitsmodul an die Encoder-Einheit kann ein den Aufforderungen der Antriebseinheit entsprechendes Aussenden von Encoder-Daten durch die Encoder-Einheit bewirkt werden.

Das Sicherheitsmodul ist somit in der Lage, der Antriebseinheit den ausgesendeten Aufforderungen entsprechende Encoder-Daten der Encoder-Einheit bereitzustellen. Hierdurch ist eine effektive und effiziente Datenkommunikation zwischen der Antriebseinheit und der Encoder-Einheit durch das Sicherheitsmodul bewirkt.

Nach einer Ausführungsform ist das Sicherheitsmodul ferner mit der Antriebseinheit synchronisierbar, wobei das Sicherheitsmodul eingerichtet ist, synchron zum Aussenden von Aufforderungen zum Aussenden von Encoder-Daten durch die Antriebseinheit entsprechende Aufforderungen durch den Protokollmaster an die Encoder-Einheit auszusenden.

Hierdurch wird der technische Vorteil erreicht, dass eine unverzögerte Datenkommunikation zwischen der Antriebseinheit und der Encoder-Einheit durch das Sicherheitsmodul bereitgestellt werden kann. Durch das Synchronisieren des Sicherheitsmoduls und der Antriebseinheit kann erreicht werden, dass zeitgleich oder mit entsprechender Verzögerung die Antriebseinheit und das Sicherheitsmodul entsprechende Aufforderungen zum Aussenden von Encoder-Daten aussenden, wobei das Sicherheitsmodul hierbei die Aufforderungen direkt an die Encoder-Einheit aussendet. Hierdurch kann erreicht werden, dass eine unverzögerte Datenkommunikation zwischen der Antriebseinheit und der Encoder-Einheit durch das Sicherheitsmodul moderiert werden kann. Durch das synchrone Aussenden gleicher Aufforderungen durch die Antriebseinheit und das Sicherheitsmodul kann eine Verzögerung im Bereitstellen entsprechender Encoder-Daten durch das Sicherheitsmodul an die Antriebseinheit verhindert werden. Hierdurch wird eine effektive, effiziente und fehlerfreie Datenkommunikation zwischen der Antriebseinheit und dem Sicherheitsmodul ermöglicht.

Nach einer Ausführungsform ist das Sicherheitsmodul ferner mit der Antriebseinheit über eine Datenbusverbindung verbindbar, und wobei das Sicherheitsmodul eingerichtet ist, zum Bewirken eines Stopps des Betriebs der Motoreinheit durch die Sicherheitslogik an die Antriebseinheit eine entsprechende Betriebsstoppnachricht auf Basis eines sicherheitsrelevanten Datenpakets gemäß einem sicheren Datenbusprotokoll der Datenbusverbindung auszusenden.

Hierdurch wird der technische Vorteil erreicht, dass eine gesicherte Datenkommunikation zwischen dem Sicherheitsmodul und der Antriebseinheit zum Bewirken eines Stopps des Betriebs der Motoreinheit des Antriebssystems bereitgestellt werden kann. Hierzu ist das Sicherheitsmodul eingerichtet, über eine sicherheitsrelevante Datenbusverbindung zwischen dem Sicherheitsmodul und der Antriebseinheit eine entsprechende Betriebsstoppnachricht an die Antriebseinheit auszusenden, um somit einen Stopp der Motoreinheit zu bewirken.

Durch die sicherheitsrelevante Datenbusverbindung beziehungsweise entsprechende sicherheitsrelevante Datenpakete eines Datenbusprotokolls der Datenbusverbindung kann eine sichere Übertragung der Betriebsstoppnachricht von dem Sicherheitsmodul, insbesondere von der Sicherheitslogik, an die Antriebseinheit bereitgestellt werden. Somit können Forderungen entsprechender Sicherheitsspezifikationen erfüllt werden. Durch die sicherheitsrelevante Datenbusverbindung zwischen der Antriebseinheit und dem Sicherheitsmodul ist eine sichere und schnelle Datenkommunikation zur Übermittlung entsprechender Betriebsstoppnachrichten zwischen der Antriebseinheit und dem Sicherheitsmodul ermöglicht.

Ein sicherheitsrelevantes Datenpaket ist im Sinne der Anmeldung ein Datenpaket eines Datenkommunikationsprotokolls, das mit Merkmalen versehen ist, die gewährleisten, dass das sicherheitsrelevante Datenpakete alle Anforderungen an eine sichere Datenkommunikation erfüllt. Ein Beispiel für ein derartiges Datenkommunikationsprotokoll beziehungsweise für entsprechende sicherheitsrelevante Datenpakete wäre das aus dem Stand der Technik bekannte Protokoll Safety-over-EtherCAT.

Nach einer Ausführungsform ist das Sicherheitsmodul ferner mit einer Safe-Torque-Off-Funktion der Antriebseinheit verbindbar, und wobei das Sicherheitsmodul eingerichtet ist, zum Bewirken eines Stopps des Betriebs der Motoreinheit durch die Sicherheitslogik an die Safe-Torque-Off-Funktion der Antriebseinheit eine entsprechende Safe-Torque-Off-Nachricht auszusenden und die Safe-Torque-Off-Funktion zu veranlassen, den Betrieb der Motoreinheit zu unterbrechen.

Hierdurch wird der technische Vorteil erreicht, dass eine technisch einfache Lösung zum Bewirken eines Stopps des Betriebs der Motoreinheit durch das Sicherheitsmodul bereitgestellt werden kann. Insbesondere für Antriebssysteme, die nicht über eine sicherheitsrelevante Datenbusverbindung verfügen, kann durch Auslösen einer Safe-Torque-Off-Funktion der Antriebseinheit durch das Sicherheitsmodul eine zuverlässige und technisch einfache Lösung zum Bewirken eines Betriebsstopps der Motoreinheit durch das Sicherheitsmodul bereitgestellt werden. Hierdurch ist das Sicherheitsmodul mit einer Safe-Torque-Off-Funktion der Antriebseinheit verbindbar und eingerichtet, eine entsprechende Safe-Torque-Off-Nachricht an die Safe-Torque-Off-Funktion auszusenden, um diese auszulösen und einen Betriebsstopp der Motoreinheit zu bewirken.

Nach einer Ausführungsform ist das Sicherheitsmodul ferner mit einem Abschaltmechanismus verbindbar, der in eine Steuerverbindung zwischen der Antriebseinheit und der Motoreinheit integriert ist, wobei das Sicherheitsmodul eingerichtet ist, zum Bewirken eines Stopps des Betriebs der Motoreinheit durch die Sicherheitslogik den Abschaltmechanismus auszulösen, und wobei der Abschaltmechanismus eingerichtet ist, die Steuerverbindung zu unterbrechen.

Hierdurch wird der technische Vorteil erreicht, dass eine technisch einfache und zuverlässige Lösung zum Bewirken eines Betriebsstopps der Motoreinheit durch das Sicherheitsmodul bereitgestellt werden kann. Insbesondere für Antriebssysteme, die nicht über eine sicherheitsrelevante Datenbusverbindung verfügen beziehungsweise keine Antriebseinheiten mit einer Safe-Torque-Off-Funktion aufweisen, können über ein Auslösen eines Abschaltmechanismus, der in einer Steuerverbindung zwischen der Antriebseinheit und der Motoreinheit installiert ist, eine Unterbrechung der Steuerverbindung erreicht und somit ein Betriebsstopp der Motoreinheit durch das Sicherheitsmodul bewirkt werden. Hierzu ist das Sicherheitsmodul mit dem Abschaltmechanismus verbindbar und eingerichtet, zum Bewirken des Betriebsstopps der Motoreinheit den Abschaltmechanismus auszulösen.

Eine Steuerverbindung ist im Sinne der Anmeldung eine Datenverbindung beziehungsweise eine elektrische Verbindung zwischen der Antriebseinheit und der Motoreinheit, über die eine Steuerung der Motoreinheit durch die Antriebseinheit ermöglicht ist. Alternativ kann eine Steuerverbindung ausschließlich über eine elektrische Verbindung zur Spannungsversorgung der Motoreinheit realisiert sein.

Nach einer Ausführungsform umfasst der Abschaltmechanismus wenigstens eine Schützeinheit.

Hierdurch wird der technische Vorteil eines technisch einfachen und zuverlässigen Abschaltmechanismus erreicht. Alternativ kann der Abschaltmechanismus eine Mehrzahl von Schützeinheiten umfassen.

Eine Schützeinheit ist im Sinne der Anmeldung ein Leistungsschütz, eine Relaiseinheit oder ein vergleichbares Schaltelement.

Nach einer Ausführungsform ist das Sicherheitsmodul mit einer weiteren Encoder-Einheit des Antriebssystems verbindbar, und wobei das Sicherheitsmodul eingerichtet ist:
von der weiteren Encoder-Einheit an die Antriebseinheit auf Basis des Encoder-Protokolls in entsprechenden Datenpaketen ausgesendete weitere Encoder-Daten mittels des Protokollmasters zu empfangen;
die empfangenen weiteren Encoder-Daten vom Protokollmaster an die Sicherheitslogik weiterzuleiten;
die weitergeleiteten Encoder-Daten der Encoder-Einheit unter Berücksichtigung der weitergeleiteten weiteren Encoder-Daten der weiteren Encoder-Einheit durch die Sicherheitslogik auf Übereinstimmung mit den vorbestimmten Sicherheitskriterien zu überprüfen; und einen Stopp des Betriebs der Motoreinheit durch die Sicherheitslogik zu bewirken, falls durch die Sicherheitslogik die Encoder-Daten unter Berücksichtigung der weiteren Encoder-Daten als nicht mit den vorbestimmten Sicherheitskriterien übereinstimmend erkannt wurden.

Hierdurch wird der technische Vorteil erreicht, dass das erfindungsgemäße Sicherheitsmodul mit zwei verschiedenen Encoder-Einheiten verbindbar und betreibbar ist. Hierdurch kann ein Sicherheitsencoder, dessen Encoder-Daten wenigstens ein erstes Positionsdatum und ein zweites Positionsdatum umfassen, und die zur Sicherheitsüberprüfung der Sicherheitslogik des Sicherheitsmoduls bereitgestellt werden, durch zwei unabhängige Encoder-Einheiten ersetzt werden, wobei eine Encoder-Einheit ein erstes Positionsdatum und die weitere Encoder-Einheit ein zweites Positionsdatum erstellt, die zur Sicherheitsüberprüfung der Sicherheitslogik des Sicherheitsmoduls bereitgestellt werden.

Hierdurch wird der technische Vorteil erreicht, dass zum Erfüllen der Anforderungen der jeweiligen Sicherheitsspezifikationen bezüglich des Antriebstyps des jeweiligen Antriebssystems anstatt eines kostenintensiven Sicherheitsencoders zwei kostengünstigere einfache Encoder-Einheiten verwendet werden können. Hierzu werden Encoder-Daten der einen Encoder-Einheit als erstes Positionsdatum und Encoder-Daten der weiteren Encoder-Einheit als zweites Positionsdatum interpretiert, die zur Sicherheitsanalyse durch die Sicherheitslogik herangezogen werden. Der Protokollmaster des Sicherheitsmoduls ist eingerichtet, eine Datenkommunikation mit der einen Encoder-Einheit als auch der weiteren Encoder-Einheit durchzuführen.

Nach einer Ausführungsform umfassen die Encoder-Daten und/oder die weiteren Encoder-Daten Positionsdaten und/oder Parameterdaten der Motoreinheit, wobei die Positionsdaten wenigstens eine Position der Motoreinheit beschreiben, und wobei die Parameterdaten wenigstens einen von der Position verschiedenen Parameter der Motoreinheit beschreiben, der eine Statusbeurteilung der Motoreinheit ermöglicht.

Hierdurch wird der technische Vorteil erreicht, dass neben Positionsdaten, die eine Position der Motoreinheit beschreiben, zusätzlich Parameterdaten, die statusrelevante Informationen bezüglich der Motoreinheit bereitstellen, zur Sicherheitsanalyse durch die Sicherheitslogik des Sicherheitsmoduls berücksichtigt werden können. Hierdurch wird eine umfassende Beurteilung der Sicherheitslage der Motoreinheit durch das Sicherheitsmodul ermöglicht. Parameterdaten können hierbei beliebige statusrelevante Informationen der Motoreinheit umfassen, beispielsweise Temperatur, Druck, Geschwindigkeit, Beschleunigung und andere relevante Angaben, die für eine Beschreibung des Status der Motoreinheit von Interesse sein können.

Nach einer Ausführungsform umfassen die Sicherheitskriterien eine maximale Position und/oder eine maximale Geschwindigkeit und/oder eine maximale Beschleunigung und/oder eine maximale Temperatur der Motoreinheit.

Hierdurch wird der technische Vorteil erreicht, dass eine umfassende und detaillierte Beurteilung eines Sicherheitsstatus der Motoreinheit erreicht werden kann. Durch die spezifischen Sicherheitskriterien kann eine spezifizierte und detaillierte Beurteilung des Sicherheitsstatus der Motoreinheit erreicht werden und Anforderungen an entsprechend spezifizierte Sicherheitsspezifikationen erfüllt werden.

Nach einem zweiten Aspekt der Erfindung wird ein Antriebssystem mit wenigstens einer Antriebseinheit, einer Encoder-Einheit, einer Motoreinheit und einem erfindungsgemäßen Sicherheitsmodul bereitgestellt, wobei die Antriebseinheit und die Encoder-Einheit über eine Datenverbindung miteinander verbunden sind und eingerichtet sind, über einen Austausch von Datenpaketen gemäß einem Encoder-Protokoll zu kommunizieren, wobei das Sicherheitsmodul über die Datenverbindung mit der Antriebseinheit und der Encoder-Einheit verbunden ist, und wobei die Antriebseinheit zum Ansteuern der Motoreinheit über eine Steuerverbindung mit der Motoreinheit verbunden ist.

Hierdurch wird der technische Vorteil erreicht, dass ein Antriebssystem mit den Vorteilen des erfindungsgemäßen Sicherheitsmoduls bereitgestellt werden kann.

Nach einem dritten Aspekt der Erfindung wird ein Automatisierungssystem mit einer Steuereinheit und wenigstens einem erfindungsgemäßen Antriebssystem bereitgestellt, wobei das Antriebssystem über eine Datenbusverbindung mit der Steuereinheit verbunden ist, wobei die Steuereinheit eingerichtet ist, das erfindungsgemäße Antriebssystem anzusteuern.

Hierdurch wird der technische Vorteil erreicht, dass ein Automatisierungssystem mit einem Antriebssystem mit den Vorteilen des erfindungsgemäßen Sicherheitsmoduls bereitgestellt werden kann.

Die Erfindung wird anhand der beigefügten Figuren näher erläutert. Hierbei zeigen:
- Fig. 1: eine schematische Darstellung eines Sicherheitsmoduls gemäß einer Ausführungsform, wobei das Sicherheitsmodul in ein Antriebssystem integriert ist;
- Fig. 2: eine weitere schematische Darstellung eines Sicherheitsmoduls gemäß einer weiteren Ausführungsform, wobei das Sicherheitsmodul in ein Antriebssystem integriert ist;
- Fig. 3: eine weitere schematische Darstellung eines Sicherheitsmoduls gemäß einer weiteren Ausführungsform, wobei das Sicherheitsmodul in ein Antriebssystem integriert ist;
- Fig. 4: eine weitere schematische Darstellung eines Sicherheitsmoduls gemäß einer weiteren Ausführungsform, wobei das Sicherheitsmodul in ein Antriebssystem integriert ist; und
- Fig. 5: eine schematische Darstellung eines Automatisierungssystems mit einem Antriebssystem mit einem Sicherheitsmodul gemäß einer Ausführungsform.

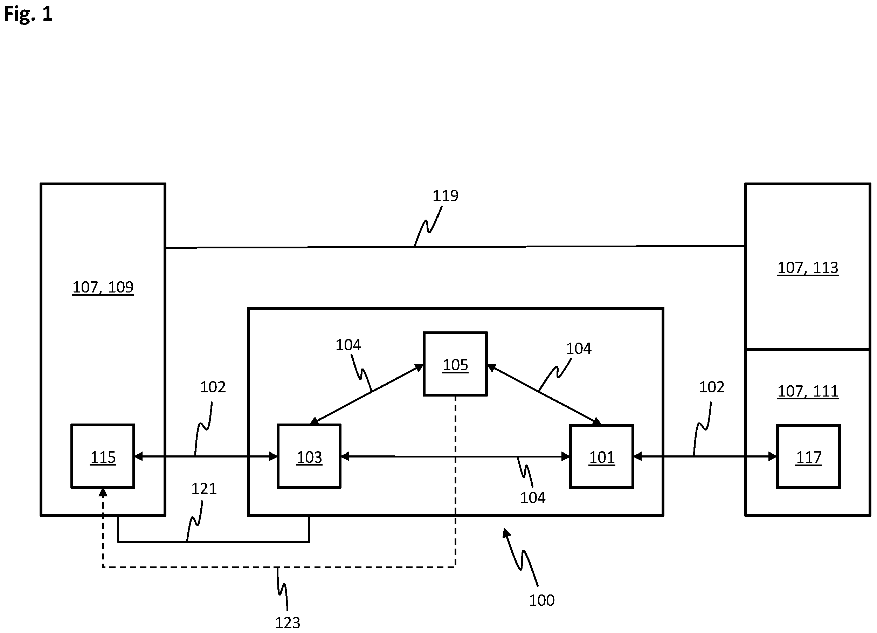

Fig. 1 zeigt eine schematische Darstellung eines Sicherheitsmoduls 100 gemäß einer Ausführungsform, wobei das Sicherheitsmodul 100 in ein Antriebssystem 107 integriert ist.

Gemäß der Ausführungsform in Fig. 1 umfasst das Antriebssystems 107 in einem Automatisierungssystem wenigstens eine Antriebseinheit 109, eine Encoder-Einheit 111 und eine Motoreinheit 113. Das Sicherheitsmodul 100 ist mit der Antriebseinheit 109 und der Encoder-Einheit 111 und somit indirekt auch mit der Motoreinheit 113 über eine Encoder-Schnittstelle 102 verbunden. Das Sicherheitsmodul 100 weist einen Protokollmaster 101, einen Protokollslave 103 und eine Sicherheitslogik 105 auf, die eingerichtet sind, mittels einer Datenkommunikation miteinander zu kommunizieren. Das Sicherheitsmodul 100 ist eingerichtet:
die von der Encoder-Einheit 111 an die Antriebseinheit 109 auf Basis eines Encoder-Protokolls ausgesendeten Encoder-Daten mittels des Protokollmasters 101 zu empfangen;
die empfangenen Encoder-Daten vom Protokollmaster 101 an die Sicherheitslogik 105 und den Protokollslave 103 weiterzuleiten;
die weitergeleiteten Encoder-Daten durch die Sicherheitslogik 105 auf Übereinstimmung mit vorbestimmten Sicherheitskriterien in Bezug auf den Betrieb der Motoreinheit 113 zu überprüfen;
die weitergeleiteten Encoder-Daten durch den Protokollslave 103 auf Basis des Encoder-Protokolls in entsprechenden Datenpaketen an die Antriebseinheit 109 auszusenden; und einen Stopp des Betriebs der Motoreinheit 113 durch die Sicherheitslogik 105 zu bewirken, falls durch die Sicherheitslogik 105 die Encoder-Daten als nicht mit den vorbestimmten Sicherheitskriterien übereinstimmend erkannt werden.

In der Ausführungsform in Fig. 1 ist das Sicherheitsmodul 100 in ein Antriebssystem 107 integriert. Die Encoder-Einheit 111 und die Motoreinheit 113 des Antriebssystems 107 sind miteinander verbunden sind. Zum Steuern der Motoreinheit 113 durch die Antriebseinheit 109 sind beide Einheiten über eine Steuerverbindung 119 verbunden. Die Antriebseinheit 109 umfasst einen Antriebsprotokollmaster 115 und die Encoder-Einheit 111 umfasst einen Encoder-Protokollslave 117. Die Antriebseinheit 109 und die Encoder-Einheit 111 sind über die Encoder-Schnittstelle 102 miteinander verbunden. Die Encoder-Schnittstelle 102 ist in das Sicherheitsmodul 100 integriert.

Das Sicherheitsmodul 100 umfasst einen Protokollmaster 101, einen Protokollslave 103 und eine Sicherheitslogik 105, die jeweils paarweise über eine erste Datenschnittstelle 104 miteinander verbunden sind. Der Protokollslave 103 des Sicherheitsmoduls 100 ist über die Encoder-Schnittstelle 102 mit dem Antriebsprotokollmaster 115 der Antriebseinheit 109 verbunden. Der Protokollmaster 101 des Sicherheitsmoduls 100 ist über die Encoder-Schnittstelle 102 mit dem Encoder-Protokollslave 117 der Encoder-Einheit 111 verbunden.

Das Sicherheitsmodul 100 ist über eine Datenbusverbindung 121 mit der Antriebseinheit 109 verbunden.

Zur Übertragung von Encoder-Daten der Encoder-Einheit 111 an die Antriebseinheit 109 sendet die Encoder-Einheit 111 entsprechende Encoder-Daten gemäß einem Encoder-Protokoll der Encoder-Schnittstelle 102 an die Antriebseinheit 109 aus. Die ausgesendeten Encoder-Daten werden vom Protokollmaster 101 des Sicherheitsmoduls 100 empfangen. Der Protokollmaster 101 kann die empfangenen Encoder-Daten gegebenenfalls bearbeiten und auf Richtigkeit überprüfen, indem der Protokollmaster 101 beispielsweise eine Prüfsumme der ausgesendeten Encoder-Daten überprüft.

Darauffolgend kann der Protokollmaster 101 die empfangenen Encoder-Daten an den Protokollslave 103 über die erste Datenschnittstelle 104 weiterleiten. Zusätzlich leitet der Encoder-Master 101 die empfangenen Encoder-Daten über die erste Datenschnittstelle 104 an die Sicherheitslogik 105 weiter. Die weitergeleiteten Encoder-Daten sendet der Protokollslave 103 über die Encoder-Schnittstelle 102 an die Antriebseinheit 109 weiter. Die ausgesendeten Encoder-Daten empfängt die Antriebseinheit 109 über den Antriebsprotokollmaster 115. Der Protokollmaster 101, der Protokollslave 103, der Antriebsprotokollmaster 115 und der Encoder-Protokollslave 117 sind hierbei Slave-Einheiten beziehungsweise Master-Einheiten des Encoder-Protokolls der Encoder-Schnittstelle 102. Die Encoder-Schnittstelle 102 kann eine im Stand der Technik bekannte Encoder-Schnittstelle sein, beispielsweise HIPERFACE DSL oder EnDat.

Alternativ kann das Sicherheitsmodul 100 mit der Encoder-Einheit 111 über eine Encoder-Schnittstelle kommunizieren, während das Sicherheitsmodul 100 mit der Antriebseinheit 109 über eine weitere Encoder-Schnittstelle kommuniziert. Der Protokoll-Master 101 und der Protokoll-Slave 103 des Sicherheitsmoduls 100 sind in dem Fall Master- und Slave-Einheiten zweier unterschiedlicher Protokolle beziehungsweise zweier unterschiedlicher Schnittstellen, sprich Encoder-Schnittstellen unterschiedlichen Typs. Zur Datenkommunikation beziehungsweise zum Weiterleiten von Daten innerhalb des Sicherheitsmoduls 100 zwischen dem Protokoll-Master 101 und dem Protokoll-Slave 103 sind diese und/oder das Sicherheitsmodul 100 eingerichtet, eine Protokollumwandlung durchzuführen, um Daten der einen Schnittstelle in der jeweils anderen Schnittstelle auszudrücken.

Der Protokollmaster 101 des Sicherheitsmoduls 100 ist eingerichtet, eine Datenkommunikation mit dem Encoder-Protokollslave 117 der Encoder-Einheit 111 durchzuführen, die zu einer Datenkommunikation zwischen dem Antriebsprotokollmaster 115 und dem Encoder-Protokollslave 117 identisch ist. Für den Encoder-Protokollslave 117 erfolgt eine Datenkommunikation mit dem Protokollmaster 101 des Sicherheitsmoduls 100 somit analog zu einer Datenkommunikation mit dem Antriebsprotokollmaster 115 der Antriebseinheit 109. Der Protokollslave 103 des Sicherheitsmoduls 100 ist eingerichtet, eine Datenkommunikation mit dem Antriebsprotokollmaster 115 der Antriebseinheit 109 durchzuführen, die zu einer Datenkommunikation zwischen dem Antriebsprotokollmaster 115 der Antriebseinheit 109 und dem Encoder-Protokollslave 117 der Encoder-Einheit 111 identisch ist. Für den Antriebsprotokollmaster 115 der Antriebseinheit 109 ist somit der Protokollslave 103 des Sicherheitsmoduls 100 nicht von dem Encoder-Protokollslave 117 der Encoder-Einheit 111 zu unterscheiden.

Für den Antriebsprotokollmaster 115 der Antriebseinheit 109 und den Encoder-Protokollslave 117 der Encoder-Einheit 111 ist somit eine Datenkommunikation, bei der, wie oben beschrieben, ein Austausch von Encoder-Daten zwischen dem Encoder-Protokollslave 117 der Encoder-Einheit 111 und dem Antriebsprotokollmaster 115 der Antriebseinheit 109 indirekt über den Protokollmaster 101 und den Protokollslave 103 des Sicherheitsmoduls 100 vorgenommen wird, analog zu einem direkten Datenaustausch von Encoder-Daten zwischen dem Encoder-Protokollslave 117 der Encoder-Einheit 111 und dem Antriebsprotokollmaster 115 der Antriebseinheit 109.

Die von der Encoder-Einheit 111 ausgesendeten Encoder-Daten können gemäß einem vorbestimmten Aussendetakt vom Encoder-Protokollslave 117 der Encoder-Einheit 111 ausgesendet werden. Alternativ können die von der Encoder-Einheit 111 ausgesendeten Encoder-Daten als Reaktion auf eine zuvor von der Antriebseinheit 109 ausgesendete Aufforderung zum Aussenden von Encoder-Daten ausgesendet werden. Hierzu ist das Sicherheitsmodul 100 gemäß einer weiteren Ausführungsform ausgebildet, über den Protokollslave 103 vom Antriebsprotokollmaster 115 der Antriebseinheit 109 ausgesendete Aufforderungen zum Aussenden von Encoder-Daten zu empfangen und entsprechende Encoder-Daten über den Protokollslave 103 an den Antriebsprotokollmaster 115 auszusenden. Ferner kann das Sicherheitsmodul 100 ausgebildet sein, die vom Protokollslave 103 empfangenen Aufforderungen über die erste Datenschnittstelle 104 an den Protokollmaster 101 weiterzuleiten und die weitergeleiteten Aufforderungen durch den Protokollmaster 101 an den Encoder-Protokollslave 117 der Encoder-Einheit 111 auszusenden.

Das Sicherheitsmodul 100 ist somit eingerichtet, eine umfassende Datenkommunikation zwischen der Antriebseinheit 109 und der Encoder-Einheit 111 bereitzustellen, bei der Encoder-Daten der Encoder-Einheit und Aufforderungen zum Aussenden von Encoder-Einheiten der Antriebseinheit zwischen der Antriebseinheit 109 und der Encoder-Einheit 111 ausgetauscht werden.

Encoder-Daten können beispielsweise Positionsdaten der Motoreinheit 113 umfassen, die Positionen einer Motorstellung der Motoreinheit 113 beschreiben. Darüber hinaus können Encoder-Daten Parameterdaten umfassen, die zusätzliche Parameter, wie beispielsweise eine Temperatur, eine Geschwindigkeit, eine Beschleunigung, einen Druck oder ähnliche Parameter der Motoreinheit beschreiben. Aufforderungen zum Aussenden von Encoder-Daten können dem Encoder-Protokoll der Encoder-Schnittstelle 102 entsprechende Sendebefehle beziehungsweise Sendeanfragen sein.

Die Encoder-Einheit 111 kann ein Sicherheitsencoder sein und Encoder-Daten des Sicherheitsencoders können ein erstes Positionsdatum und ein zweites Positionsdatum umfassen, die für eine Sicherheitsanalyse verwendbar sind.

Die vom Protokollmaster 101 über die erste Datenschnittstelle 104 an die Sicherheitslogik 105 übermittelten Encoder-Daten werden durch die Sicherheitslogik 105 einer Sicherheitsanalyse gemäß vorbestimmten Sicherheitskriterien unterzogen. Die Sicherheitskriterien können beispielsweise eine maximale Position beziehungsweise eine minimale Position der Motoreinheit 113 sein. Alternativ können die Sicherheitskriterien eine maximale Geschwindigkeit beziehungsweise eine minimale Geschwindigkeit, eine maximale Beschleunigung beziehungsweise eine minimale Beschleunigung, eine maximale Temperatur beziehungsweise eine minimale Temperatur, ein maximaler Druck beziehungsweise ein minimaler Druck beziehungsweise weitere sicherheitsrelevante Kriterien des Betriebs der Motoreinheit 113, wie beispielsweise Maximalwerte hinsichtlich in der Motoreinheit auftretende Vibrationen, umfassen. Alternativ können die Sicherheitskriterien zusätzlich dem Typ der Motoreinheit spezifische Sicherheitskriterien sein, die eine Aussage über den Sicherheitszustand der Motoreinheit 113 lassen.

Zur Analyse der Encoder-Daten durch die Sicherheitslogik 105 kann die Sicherheitslogik 105 verschiedene aus dem Stand der Technik bekannte Analyseprozeduren verwenden.

Ergibt die Analyse der Sicherheitslogik 105, dass Encoder-Daten der Encoder-Einheit 111 den Sicherheitskriterien nicht entsprechen, indem beispielsweise maximale beziehungsweise minimale Positionen, maximale beziehungsweise minimale Geschwindigkeiten, maximale beziehungsweise minimale Beschleunigungen, maximale beziehungsweise minimale Temperaturen oder ähnliche Parameter der Motoreinheit 113 überschritten beziehungsweise unterschritten wurden, bewirkt die Sicherheitslogik 105 einen Stopp des Betriebs der Motoreinheit.

In der Ausführungsform in Fig. 1 sendet die Sicherheitslogik 105 hierzu eine entsprechende Betriebsstoppnachricht an die Antriebseinheit 109 aus, auf deren Basis die Antriebseinheit 109 über die Steuerverbindung 119 den Betrieb der Motoreinheit 113 stoppt. In der Ausführungsform in Fig. 1 sendet die Sicherheitslogik 105 die Betriebsstoppnachricht auf Basis eines sicherheitsrelevanten Datenpakets gemäß einer sicherheitsrelevanten Datenkommunikation 123 der Datenbusverbindung 121 an die Antriebseinheit 109. Eine sicherheitsrelevante Datenkommunikation 123 kann beispielsweise über ein sicherheitsrelevantes Feldbusprotokoll, beispielsweise Safety-over-EtherCAT realisiert sein. Über die sicherheitsrelevante Datenverbindung 123 ist gewährleistet, dass die Betriebsstoppnachricht der Sicherheitslogik 105 zuverlässig und unverzögert an die Antriebseinheit 109 übertragen wird, so dass ein entsprechender Betriebsstopp der Motoreinheit 113 unverzüglich nach Identifikation des Sicherheitsrisikos bewirkt werden kann.

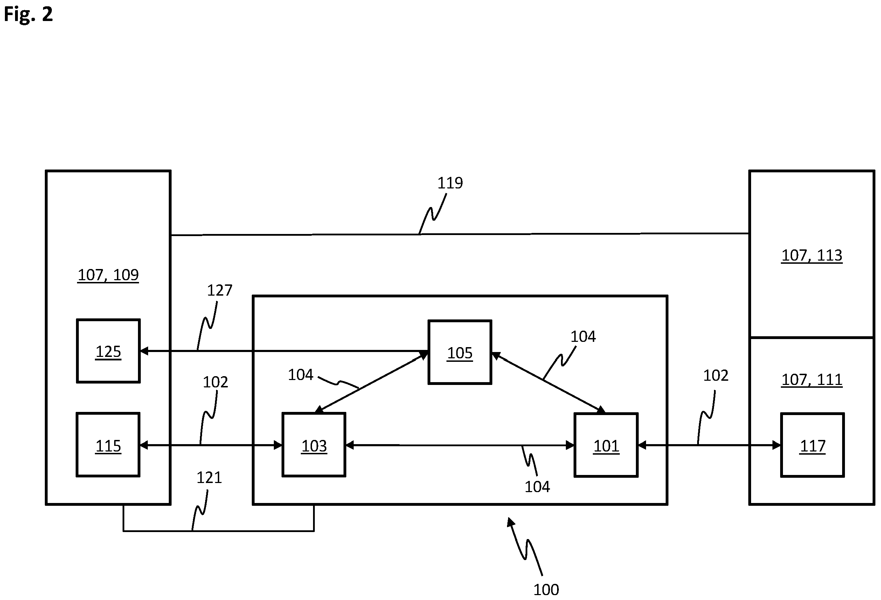

Fig.2 zeigt eine weitere schematische Darstellung eines Sicherheitsmoduls 100 gemäß einer weiteren Ausführungsform, wobei das Sicherheitsmodul 100 in ein Antriebssystem 107 integriert ist.

Die Ausführungsform in Fig. 2 unterscheidet sich von der Ausführungsform in Fig. 1 dadurch, dass die Antriebseinheit 109 eine Safe-Torque-Off-Funktion 125 umfasst. Die Sicherheitslogik 105 ist über eine Safe-Torque-Off-Schnittstelle 127 mit der Safe-Torque-Off-Funktion 125 der Antriebseinheit 109 verbunden. Identifiziert die Sicherheitslogik 105, dass die Encoder-Daten der Encoder-Einheit 111 die Sicherheitskriterien nicht erfüllen, sendet die Sicherheitslogik 109 über die Safe-Torque-Off-Schnittstelle 127 eine Safe-Torque-Off-Nachricht an die Safe-Torque-Off-Funktion 125 der Antriebseinheit 109, wodurch die Safe-Torque-Off-Funktion 125 veranlasst wird, den Betrieb der Motoreinheit 113 zu stoppen. Hierzu wird über die Steuerverbindung 119 von der Antriebseinheit 109 ein Betriebsstopp der Motoreinheit 113 bewirkt.

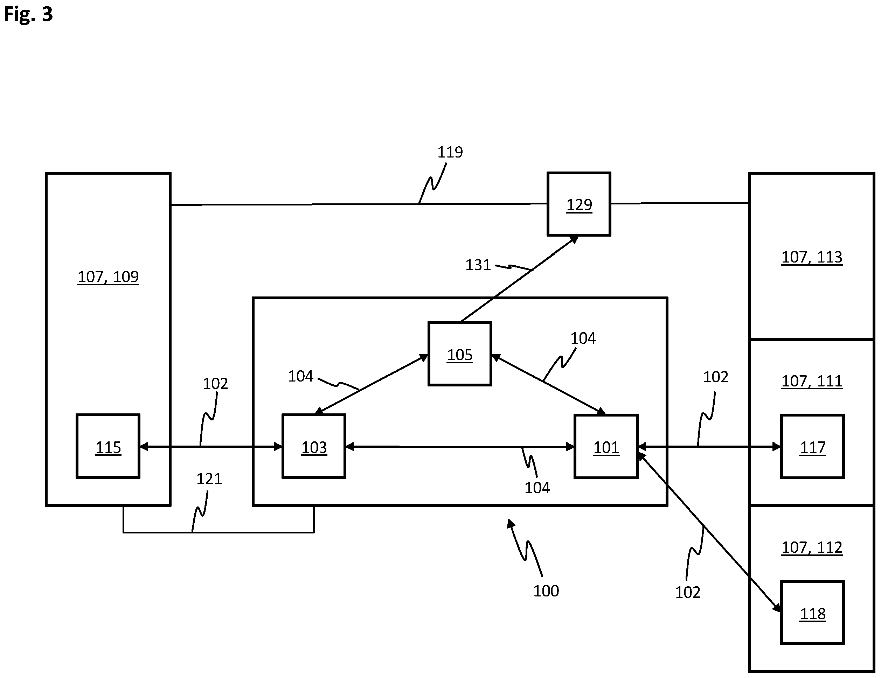

Fig.3 zeigt eine weitere schematische Darstellung eines Sicherheitsmoduls 100 gemäß einer weiteren Ausführungsform, wobei das Sicherheitsmodul 100 in ein Antriebssystem 107 integriert ist.

Die Ausführungsform in Fig. 3 unterscheidet sich von den Ausführungsformen in Fig. 1 und Fig. 2 dadurch, dass in der Steuerverbindung 119 ein Abschaltmechanismus 129 integriert ist. Die Sicherheitslogik 105 ist über eine Abschaltverbindung 131 mit dem Abschaltmechanismus 129 verbunden. Darüber hinaus weist in der Ausführungsform in Fig. 3 das Antriebssystem 107 eine weitere Encoder-Einheit 112 auf, die wiederum einen weiteren Encoder-Protokollslave 118 aufweist. Die weitere Encoder-Einheit 112 ist mit der Motoreinheit 113 verbunden und eingerichtet, weitere Encoder-Daten der Motoreinheit 113 aufzunehmen und über die Encoder-Schnittstelle 102 an die Antriebseinheit 109 beziehungsweise das Sicherheitsmodul 100, insbesondere an den Protokollmaster 101 des Sicherheitsmoduls 100, auszusenden. In der Ausführungsform in Fig. 3 sind die Encoder-Einheit 111 und die weitere Encoder-Einheit 112 jeweils kein Sicherheitsencoder, sondern lediglich als einfache Encoder ausgebildet.

Die von der weiteren Encoder-Einheit 112 ausgesendeten weiteren Encoder-Daten werden vom Protokollmaster 101 des Sicherheitsmoduls 100 empfangen und über die erste Datenschnittstelle 104 an die Sicherheitslogik 105 weitergeleitet. Die weiteren Encoder-Daten werden von der Sicherheitslogik 105 zusätzlich zu den Encoder-Daten der Encoder-Einheit 111 berücksichtigt. Hierzu werden insbesondere aus den Encoder-Daten der Encoder-Einheit 111 ein erstes Positionsdatum der Motoreinheit 113 und aus den weiteren Encoder-Daten der weiteren Encoder-Einheit 112 ein zweites Positionsdatum der Motoreinheit 113 erstellt. Das erste Positionsdatum der Encoder-Daten der Encoder-Einheit 111, das eine erste Position der Motoreinheit 113 beschreibt, und das zweite Positionsdatum Positionsdatum der weiteren Encoder-Daten der weiteren Encoder-Einheit 112, das eine zweite Position der Motoreinheit 113 beschreibt, werden für die Analyse der Encoder-Daten beziehungsweise weiteren Encoder-Daten durch die Sicherheitslogik 105 gemeinsam berücksichtigt.

Neben dem zweiten Positionsdatum können die weiteren Encoder-Daten im Übrigen weitere Parameterdaten umfassen.

Erkennt die Sicherheitslogik 105 auf Basis der Analyse der Encoder-Daten der Encoder-Einheit 111 und der weiteren Encoder-Daten der weiteren Encoder-Einheit 112 einen Verstoß gegen die Sicherheitsanforderungen, löst die Sicherheitslogik 105 mittels eines, über die Abschaltverbindung 131 übertragenen entsprechenden Signals, den Abschaltmechanismus 129 aus, wodurch die Steuerverbindung 119 zwischen der Antriebseinheit 109 und der Motoreinheit 113 unterbrochen wird. Hierdurch wird ein Stopp des Betriebs der Motoreinheit 113 bewirkt. Der Abschaltmechanismus 129 kann beispielsweise ein Relaismechanismus beziehungsweise ein Schützmechanismus sein.

Alternativ sind auch Kombinationen der Ausführungsformen gemäß den Fig. 1, Fig. 2 und Fig. 3 möglich.

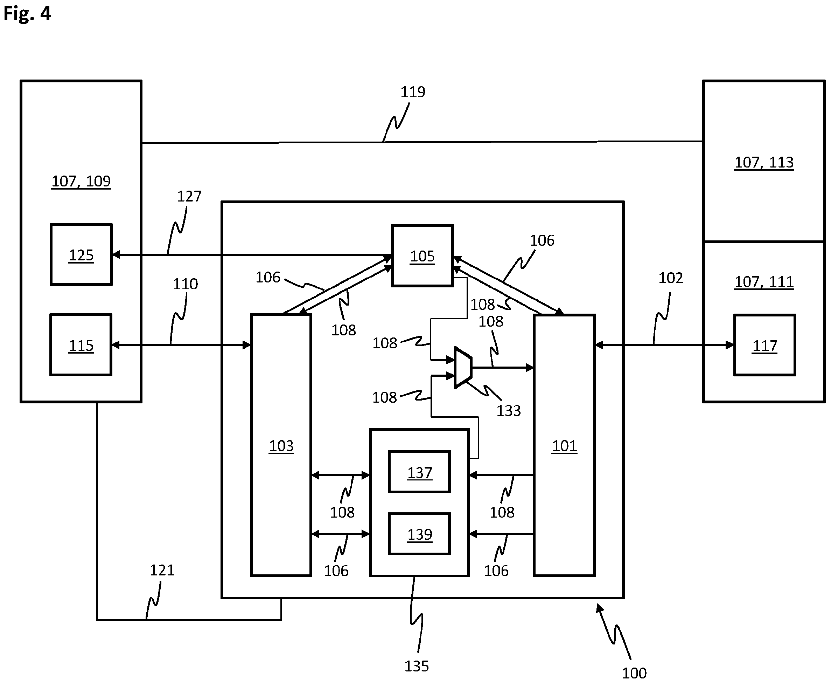

Fig.4 zeigt eine weitere schematische Darstellung eines Sicherheitsmoduls 100 gemäß einer weiteren Ausführungsform, wobei das Sicherheitsmodul 100 in ein Antriebssystem 107 integriert ist.

Die Ausführungsform in Fig. 4 basiert auf der Ausführungsform in Fig. 2.

Abweichend zu der Ausführungsform in Fig. 2 sind der Antriebs-Protokollmaster 115 und der Protokoll-Slave 103 des Sicherheitsmoduls 100 über eine weitere Encoder-Schnittstelle 110 verbunden, die sich von der Encoder-Schnittstelle 102 entsprechend Fig. 2 unterscheidet. Eine Datenkommunikation zwischen dem Antriebs-Protokollmaster 115 und dem Protokoll-Slave 103 findet auf Basis eines Protokolls der weiteren Encoder-Schnittstelle 110 statt.

Ferner abweichend zu der Ausführungsform in Fig. 2 weist das Sicherheitsmodul 100 einen Encoder-Emulator 135 auf. Der Encoder-Emulator 135 weist eine Positionsemulation 137 und eine Speichereinheit 139 auf. Der Protokollmaster 101, der Protokollslave 103, die Sicherheitslogik 105 und der Encoder-Emulator 135 sind miteinander über eine zweite Datenschnittstelle 106 und eine dritte Datenschnittstelle 108 verbunden. Die zweite Datenschnittstelle 106 dient hierbei zur Übertragung von zyklischen Daten, während die dritte Datenschnittstelle 108 zur Übertragung von azyklischen Daten dient. Zyklische Daten umfassen im Sinne der Anmeldung Daten, die innerhalb eines Steuerzyklus übertragen werden. Azyklische Daten sind im Sinne der Anmeldung Daten, die zwischen Steuerzyklen oder über mehrere Steuerzyklen verteil übertragen werden.

Eine zyklische Datenübertragung und eine azyklische Datenübertragung spielt insbesondere in einer Anwendung des Antriebssystems 107 in einem Automatisierungssystem eine Rolle. Eine zyklische Datenübertragung betrifft in diesem Fall eine Übertragung von Daten innerhalb eines Steuerzyklus des Automatisierungssystems. Eine azyklische Datenübertragung betrifft hingegen eine Übertragung von Daten, die zwischen zwei Steuerzyklen durchgeführt wird, beziehungsweise, die sich über mehr als einen Steuerzyklus erstrecken kann. Eine zyklische Datenübertragung umfasst für gewöhnlich die Daten, die zur Steuerung des Automatisierungssystems unmittelbar benötigt werden. Eine azyklische Datenübertragung kann darüber hinaus Daten umfassen, die nicht direkt für die Steuerung benötigt werden, dies können beispielsweise Statusdaten einzelner Komponenten des Automatisierungssystems sein.

In der vorliegenden Ausführungsform werden in einer zyklischen Datenübertragung insbesondere Positionsdaten der Encoder-Einheit 111 zwischen der Encoder-Einheit 111 und der Antriebseinheit 109 zum Steuern der Motoreinheit 113 ausgetauscht. In einer azyklischen Datenübertragung können Parameterdaten der Encoder-Einheit 111 beziehungsweise der Motoreinheit 113 zwischen der Encoder-Einheit 111 und der Antriebseinheit 109 ausgetauscht werden.

Sendet die Antriebseinheit 109 gemäß der Steuerung der Motoreinheit 113 in einer zyklischen Datenübertragung eine Aufforderung zum Aussenden von Encoder-Daten an die Encoder-Einheit 111, empfängt der Protokollslave 103 des Sicherheitsmoduls 100 die vom Antriebsprotokollmaster 115 ausgesendete Aufforderung und leitet diese über die zweite Datenschnittstelle 106 an die Sicherheitslogik 105 weiter. Die Sicherheitslogik 105 leitet die weitergeleitete Aufforderung über die zweite Datenschnittstelle 106 an den Protokollmaster 101 weiter, der wiederum die Aufforderung über die Encoder-Schnittstelle 102 an den Encoder-Protokollslave 117 der Encoder-Einheit 111 aussendet. Hierauf sendet der Encoder-Protokollslave 117 der Encoder-Einheit 111 entsprechende Encoder-Daten über die in Encoder-Schnittstelle 102 an die Antriebseinheit 109, die vom Protokollmaster 101 des Sicherheitsmoduls 100 empfangen und über die zweite Datenschnittstelle 106 an den Encoder-Emulator 135 weitergeleitet werden. Der Encoder-Emulator 135 leitet die weitergeleiteten Encoder-Daten über die zweite Datenschnittstelle 106 an den Protokollslave 103 weiter, der über die weitere Encoder-Schnittstelle 110 die weitergeleiteten Encoder-Daten an den Antriebsprotokollmaster 115 der Antriebseinheit 109 aussendet.

Zur Analyse der Encoder-Daten durch die Sicherheitslogik 105 werden die vom Encoder-Protokollslave 117 der Encoder-Einheit 111 ausgesendeten Encoder-Daten vom Protokollmaster 101 über die zweite Datenschnittstelle 106 ferner an die Sicherheitslogik 105 weitergeleitet. Erkennt die Sicherheitslogik 105 auf Basis der Encoder-Daten eine Sicherheitsgefährdung, veranlasst die Sicherheitslogik 105 die Safe-Torque-Off-Funktion 125 der Antriebseinheit 109, einen Betriebsstopp der Motoreinheit 113 zu bewirken.

Alternativ zum Weiterleiten der Aufforderung über die erste Datenschnittstelle 104 an die Sicherheitslogik 105 leitet der Protokollslave 103 die Aufforderung zum Aussenden von Encoder-Daten der Antriebseinheit 109 über die zweite Datenschnittstelle 106 an den Encoder-Emulator 135 weiter. Hierauf folgend kann der Encoder-Emulator 135 entsprechende Encoder-Daten, die in der Speichereinheit 139 gespeichert sind, über die zweite Datenschnittstelle 106 an den Protokollslave 103 weiterleiten, der wiederum die weitergeleiteten Encoder-Daten an den Antriebsprotokollmaster 115 der Antriebseinheit 109 aussendet.

Alternativ kann der Encoder-Emulator 135 auf die weitergeleitete Aufforderung zum Aussenden von Encoder-Daten über die Positionsemulation 137 den Aufforderungen entsprechende simulierte Encoder-Daten generieren und diese über die zweite Datenschnittstelle 106 an den Protokollslave 103 weiterleiten, der wiederum die simulierten Encoder-Daten an den Antriebsprotokollmaster 115 der Antriebseinheit 109 aussendet. Das Aussenden von Encoder-Daten, die in der Speichereinheit 139 gespeichert sind, beziehungsweise das Aussenden von simulierten Encoder-Daten kann insbesondere für die Fälle durchgeführt werden, für die ein Weiterleiten der Aufforderung zum Aussenden von Encoder-Daten an die Encoder-Einheit 111 und ein Übertragen der Encoder-Daten der Encoder-Einheit 111 über das Sicherheitsmodul 100 an die Antriebseinheit 109 zu einer Verzögerung und damit zum Aussenden einer Fehlernachricht aufgrund der nicht rechtzeitig bereitgestellten Encoder-Daten durch die Antriebseinheit 109 führen würde.

Durch das Berücksichtigen von in der Speichereinheit 139 gespeicherten Encoder-Daten beziehungsweise von simulierten Encoder-Daten kann erreicht werden, dass das Sicherheitsmodul 100 weder von dem Antriebsprotokollmaster 115 der Antriebseinheit 109 noch von dem Encoder-Protokollslave 117 der Encoder-Einheit 111 registriert wird und eine aus Sicht der Antriebseinheit 109 unverzögerte und zuverlässige Datenkommunikation zwischen der Antriebseinheit 109 und der Encoder-Einheit 111 bereitgestellt werden kann.

Alternativ können Aufforderungen des Antriebsprotokollmasters 115 an den Encoder-Protokollslave 117 zusätzlich oder exklusiv mit einer Zeitverzögerung an den Encoder-Protokollslave 117 weitergeleitet werden. Dies kann insbesondere für Fälle berücksichtigt werden, dass Aufforderungen des Antriebs-Protokollmasters 115 eine Handlung des Encoder-Protokollslaves 117, wie beispielsweise das Speichern oder Löschen von Encoder-daten durch den Encoder-Protokollslave 117, betrifft. Durch das Sicherheitsmodul 100, und insbesondere durch den Encoder-Emulator 135, durch das aus Sicht des Antriebsprotokollmasters 115 der Encoder-Protokollslave 117 simuliert wird, kommt es aus Sicht des Antriebsprotokollmasters 115 zu keiner Verzögerung, sodass eine Fehlermeldung durch den Antriebsprotokollmaster 115 aufgrund verzögerten Ansprechens des Encoder-Protokollslaves 117 vermieden werden kann.

Die über die zweite Datenschnittstelle 106 übertragenen Encoder-Daten umfassen bevorzugt Positionsdaten der Motoreinheit 113, die zur Steuerung der Motoreinheit 113 durch die Antriebseinheit 109 in einer zyklischen Datenkommunikation zwischen der Antriebseinheit 109 und der Encoder-Einheit 111 ausgetauscht werden. Alternativ können die Encoder-Daten, die über die zweite Datenschnittstelle 106 übertragen werden, und die zyklisch zwischen der Antriebseinheit 109 und der Encoder-Einheit 111 ausgetauscht werden, weitere Parameterdaten der Motoreinheit 113 umfassen.

Encoder-Daten, die in einem azyklischen Datenaustausch zwischen der Antriebseinheit 109 und der Encoder-Einheit 111 ausgetauscht werden, können innerhalb des Sicherheitsmoduls 100 über die dritte Datenschnittstelle 108 weitergeleitet werden.

Werden vom Antriebsprotokollmaster 115 der Antriebseinheit 109 Parameterdaten abgefragt, die vorzugsweise azyklisch übertragen werden, leitet der Protokollslave 103 die entsprechende Aufforderung über die dritte Datenschnittstelle 108 an den Encoder-Emulator 135 weiter. Dieser kann entweder entsprechende Encoder-Daten, die in der Speichereinheit 139 gespeichert sind, an den Protokollslave 103 über die dritte Datenschnittstelle 108 weiterleiten, oder die entsprechende Anforderung über die dritte Datenschnittstelle 108 und eine Schalteinheit 133 an den Protokollmaster 101 weiterleiten, der die entsprechende Aufforderung an den Encoder-Protokollslave 117 der Encoder-Einheit 111 aussendet. Dieser sendet darauffolgend entsprechende Encoder-Daten an die Antriebseinheit 109 aus, die vom Protokollmaster 101 über die dritte Datenschnittstelle 108 an den Encoder-Emulator 135 weitergeleitet werden, die wiederum vom Encoder-Emulator 135 über die dritte Datenschnittstelle 108 an den Protokollslave 103 weitergeleitet werden und vom Protokollslave 103 an den Antriebsprotokollmaster 115 ausgesendet werden.

Die vom Protokollmaster 101 empfangenen Parameterdaten der Encoder-Einheit 111 können zusätzlich zur Analyse durch die Sicherheitslogik 105 vom Protokollmaster 101 über die dritte Datenschnittstelle 108 an die Sicherheitslogik 105 übertragen werden.

Die zyklisch zwischen der Antriebseinheit 109 und der Encoder-Einheit 111 ausgetauschten Positionsdaten können auf ein erstes Positionsdatum beschränkt sein. Ein zweites Positionsdatum, das beispielsweise durch einen Sicherheitsencoder oder eine weitere Encoder-Einheit 112 für die Sicherheitsanalyse durch die Sicherheitslogik 105 erstellt wird, kann gemeinsam mit dem ersten Positionsdatum zyklisch übertragen werden, so dass das vom Protokollmaster 101 empfangene zweite Positionsdatum über die zweite Datenschnittstelle 106 an die Sicherheitslogik 105 übertragen wird. Alternativ kann das zweite Positionsdatum gemeinsam mit den Parameterdaten azyklisch übertragen werden, so dass das vom Protokollmaster 101 empfangene zweite Positionsdatum über die dritte Datenschnittstelle 108 an die Sicherheitslogik 105 und von dieser an den Protokollslave 103 übertragen wird. Hierzu kann zuvor vom Antriebsprotokollmaster 115 der Antriebseinheit 109 eine entsprechende Aufforderung zum Aussenden von zweiten Positionsdaten an die Encoder-Einheit 111 gesendet werden. Diese Aufforderung wird gemäß der azyklischen Datenübertragung vom Protokollslave 103 über die dritte Datenschnittstelle 108 an die Sicherheitslogik 105 und von der Sicherheitslogik 105 über die Schalteinheit 133 an den Protokollmaster 101 übertragen. Die Schalteinheit 133 kann hierbei als Regelungselement fungieren und regeln, welche der über die dritte Datenschnittstelle 108 vom Encoder-Emulator 135 und der Safety-Logik 105 übertragene Daten an den Protokollmaster 101 übertragen werden.

Durch die beiden voneinander getrennten Kommunikationskanäle, den zyklischen Kommunikationskanal, der durch die zweite Datenschnittstelle 106 realisiert ist, und den azyklischen Kommunikationskanal, der durch die dritte Datenschnittstelle 108 realisiert ist, kann erreicht werden, dass die zyklische Datenkommunikation zwischen der Antriebseinheit 109 und der Encoder-Einheit 111 unverzögert durchgeführt werden kann. Darüber hinaus kann erreicht werden, dass die Sicherheitslogik 105 sowohl auf die zyklisch übertragenden Positionsdaten, die vorzugsweise auf ein erstes Positionsdatum beschränkt sind, als auch auf die azyklisch übertragenden Parameterdaten beziehungsweise das zweite Positionsdatum zum Durchführen der Sicherheitsanalyse Zugriff hat.

Alternativ zu der Encoder-Schnittstelle 102 und der weiteren Encoder-Schnittstelle 110 kann eine Datenkommunikation zwischen der Antriebseinheit 109 und der Encoder-Einheit 111 beziehungsweise dem Sicherheitsmodul 100 über einen Datenbus, insbesondere einen Feldbus, realisiert werden. Hierzu kann eine Querkommunikation realisiert sein, die eine direkte Datenkommunikation zwischen der Antriebseinheit 109, der Encoder-Einheit 111 und dem Sicherheitsmodul 100 gewährleistet, bei der auszutauschende Datenpakete nicht über einen Busmaster des Datenbusses moderiert werden, sondern direkt zwischen der Antriebseinheit 109, der Encoder-Einheit 111 und dem Sicherheitsmodul 100 ausgetauscht werden.

Das Sicherheitsmodul 100 kann als eine Hardwarekomponente, insbesondere als eine Busklemme, ausgebildet sein. Das Sicherheitsmodul 100 kann entsprechende Kontaktverbindungen aufweisen, über die das Sicherheitsmodul 100 mit einer Antriebseinheit 109 und einer Encoder-Einheit 111 verbindbar ist.

Eine Encoder-Einheit 111 beziehungsweise eine weitere Encoder-Einheit 112 können ein Absolut-Encoder, ein Inkremental-Encoder, ein Dreh-Encoder oder ein Linear-Encoder sein. Eine Motoreinheit 113 kann eine beliebige Motoreinheit, insbesondere eine Servomotoreinheit, sein.

Die Ausführungsform in Fig. 4 kann mit Merkmalen der Ausführungsformen der Fig. 1 und 3 kombiniert werden. Insbesondere kann die Ausführungsform in Fig. 4 mit einer sicherheitsrelevante Datenkommunikation 123 gemäß der Ausführungsform in Fig. 1 und/oder mit einem Abschaltmechanismus 129 und einer Abschaltverbindung 131 gemäß der Ausführungsform in Fig. 3 kombiniert werden.

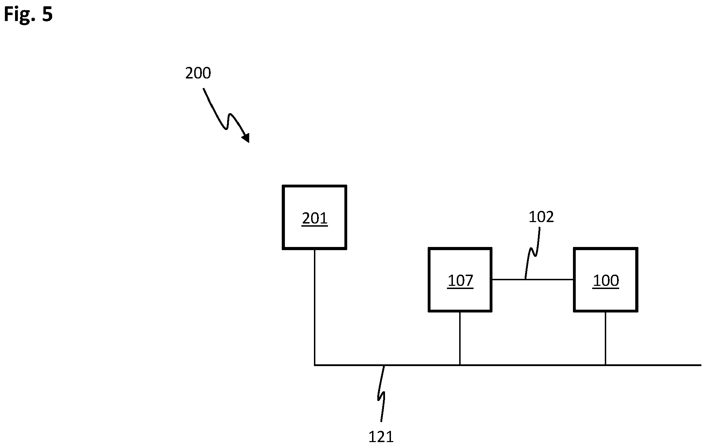

Fig.5 zeigt eine schematische Darstellung eines Automatisierungssystems 200 mit einem Antriebssystem 107 mit einem Sicherheitsmodul 100 gemäß einer Ausführungsform.

In der Ausführungsform in Fig. 5 umfasst das Automatisierungssystem 200 eine Steuereinheit 201 und ein Antriebssystem 107, das über eine Encoder-Schnittstelle 102 mit einem Sicherheitsmodul 100 verbunden ist. In der Ausführungsform in Fig. 5 sind sowohl das Antriebssystem 107 als auch das Sicherheitsmodul 100 über eine Datenbusverbindung 121 mit der Steuereinheit 201 verbunden. Über die Steuereinheit 201 ist das Antriebssystem 107 ansteuerbar.

Alternativ zu der in Fig. 5 gezeigten Ausführungsform kann das Automatisierungssystem 200 ferner zusätzliche Komponenten aufweisen. Die Datenbusverbindung 121 kann ein Feldbussystem sein.

### Bezugszeichenliste

- 100: Sicherheitsmodul
- 101: Protokollmaster
- 102: Encoder-Schnittstelle
- 103: Protokollslave
- 104: erste Datenschnittstelle
- 105: Sicherheitslogik
- 106: zweite Datenschnittstelle
- 107: Antriebssystem
- 108: dritte Datenschnittstelle
- 109: Antriebseinheit
- 110: weitere Encoder-Schnittstelle
- 111: Encoder-Einheit
- 112: weitere Encoder-Einheit
- 113: Motoreinheit
- 115: Antriebsprotokollmaster
- 117: Encoder-Protokollslave
- 117: weiterer Encoder-Protokollslave
- 119: Steuerverbindung
- 121: Datenbusverbindung
- 123: sicherheitsrelevante Datenkommunikation
- 125: Safety-Torque-Off-Funktion
- 127: Safety-Torque-Off-Verbindung
- 129: Abschaltmechanismus
- 131: Abschaltverbindung
- 133: Schaltungs-Einheit
- 135: Encoder-Emulator
- 137: Positions-Emulation
- 139: Speichereinheit

## Patentansprüche

1. Sicherheitsmodul (100) für eine gesicherte Antriebssteuerung eines Antriebssystems (107) in einem Automatisierungssystem (200), wobei das Antriebssystem wenigstens eine Antriebseinheit (109), eine Encoder-Einheit (111) und eine Motoreinheit (113) aufweist, wobei das Sicherheitsmodul (100) zwischen die Antriebseinheit (109) und die Encoder-Einheit (111) integrierbar und mit diesen über wenigstens eine Datenverbindung verbindbar ist, wobei das Sicherheitsmodul (100) einen Protokollmaster (101), einen Protokollslave (103) und eine Sicherheitslogik (105) aufweist, die eingerichtet sind, mittels einer Datenkommunikation miteinander zu kommunizieren, wobei der Protokollmaster (101) als eine Master-Einheit und der Protokollslave (103) als eine Slave-Einheit eines Encoder-Protokolls einer Encoder-Schnittstelle (102) ausgebildet sind, und wobei das Sicherheitsmodul (100) eingerichtet ist:
von einem als Slave-Einheit des Encoder-Protokolls ausgebildeten Encoder-Protokollslave (117) der Encoder-Einheit (111) an einen als Master-Einheit des Encoder-Protokolls ausgebildeten Antriebsprotokollmaster (115) der Antriebseinheit (109) auf Basis des Encoder-Protokolls ausgesendete Encoder-Daten mittels des Protokollmasters (101) zu empfangen;
die empfangenen Encoder-Daten vom Protokollmaster (101) an die Sicherheitslogik (105) und den Protokollslave (103) weiterzuleiten;
die weitergeleiteten Encoder-Daten durch die Sicherheitslogik (105) auf Übereinstimmung mit vorbestimmten Sicherheitskriterien in Bezug auf den Betrieb der Motoreinheit (113) zu überprüfen;
die weitergeleiteten Encoder-Daten durch den Protokollslave (103) auf Basis des Encoder-Protokolls in entsprechenden Datenpaketen an den Antriebsprotokollmaster (115) der Antriebseinheit (109) auszusenden; und
einen Stopp des Betriebs der Motoreinheit (113) durch die Sicherheitslogik (105) zu bewirken, falls durch die Sicherheitslogik (105) die Encoder-Daten als nicht mit den vorbestimmten Sicherheitskriterien übereinstimmend erkannt werden,
wobei die Datenkommunikation zwischen dem Encoder-Protokollslave (117) der Encoder-Einheit (111) und dem Protokollmasters (101) des Sicherheitsmoduls (100) und zwischen dem Protokollslave (103) des Sicherheitsmoduls (100) und dem Antriebsprotokollmaster (115) der Antriebseinheit (109) analog zu einer Datenkommunikation zwischen dem Encoder-Protokollslave (117) der Encoder-Einheit (111) und dem Antriebsprotokollmaster (115) der Antriebseinheit (109) ausgebildet ist.

2. Sicherheitsmodul (100) nach Anspruch 1, wobei das Sicherheitsmodul (100) ferner eingerichtet ist, durch den Protokollmaster (101) Aufforderungen zum Aussenden von Encoder-Daten an den Encoder-Protokollslave (117) der Encoder-Einheit (111) auszusenden.

3. Sicherheitsmodul (100) nach einem der voranstehenden Ansprüche, wobei das Sicherheitsmodul (100) ferner eingerichtet ist, durch den Antriebsprotokollmaster (115) der Antriebseinheit (109) an den Encoder-Protokollslave (117) der Encoder-Einheit (111) ausgesendete Aufforderungen zum Aussenden von Encoder-Daten durch den Protokollslave (103) zu empfangen; und
den Aufforderungen entsprechende Encoder-Daten durch den Protokollslave (103) an den Antriebsprotokollmaster (115) der Antriebseinheit (109) auszusenden.

4. Sicherheitsmodul (100) nach einem der voranstehenden Ansprüche, ferner umfassend einen Encoder-Emulator (135), wobei der Encoder-Emulator (135) eingerichtet ist, simulierte Encoder-Daten zu generieren, und wobei die simulierten Encoder-Daten einer Simulation der Encoder-Daten der Encoder-Einheit (111) entsprechen.

5. Sicherheitsmodul (100) nach einem der voranstehenden Ansprüche, wobei das Sicherheitsmodul (100) ferner eine Speichereinheit umfasst, und wobei das Sicherheitsmodul (100) ferner eingerichtet ist, durch den Protokollmaster (101) empfangene Encoder-Daten der Encoder-Einheit (111) und/oder simulierte Encoder-Daten des Encoder-Emulators (135) in der Speichereinheit zu speichern.

6. Sicherheitsmodul (100) nach Anspruch 3, 4 oder 5, wobei die durch den Protokollslave (103) den Aufforderungen entsprechend ausgesendeten Encoder-Daten in der Speichereinheit gespeichert sind, und/oder
wobei die den Aufforderungen entsprechend ausgesendeten Encoder-Daten simulierte Encoder-Daten des Encoder-Emulators (135) sind.

7. Sicherheitsmodul (100) nach einem der voranstehenden Ansprüche, wobei das Sicherheitsmodul (100) ferner eingerichtet ist, die empfangenen Aufforderungen zum Aussenden von Encoder-Daten durch den Protokollslave (103) an den Protokollmaster (101) weiterzuleiten, und
die weitergeleiteten Aufforderungen durch den Protokollmaster (101) an den Encoder-Protokollslave (117) der Encoder-Einheit (111) auszusenden.

8. Sicherheitsmodul (100) nach Anspruch 7, wobei das Sicherheitsmodul (100) ferner mit der Antriebseinheit (109) synchronisierbar ist, und wobei das Sicherheitsmodul (100) eingerichtet ist, synchron zum Aussenden von Aufforderungen zum Aussenden von Encoder-Daten durch die Antriebseinheit (109) entsprechende Aufforderungen durch den Protokollmaster (101) an den Encoder-Protokollslave (117) der Encoder-Einheit (111) auszusenden.

9. Sicherheitsmodul (100) nach einem der voranstehenden Ansprüche, wobei das Sicherheitsmodul (100) ferner mit der Antriebseinheit (109) über eine Datenbusverbindung (121) verbindbar ist, und wobei das Sicherheitsmodul (100) eingerichtet ist, zum Bewirken eines Stopps des Betriebs der Motoreinheit (113) durch die Sicherheitslogik (105) an die Antriebseinheit (109) eine entsprechende Betriebsstoppnachricht auf Basis eines sicherheitsrelevanten Datenpakets gemäß einem sicheren Datenbusprotokoll der Datenbusverbindung (121) auszusenden.

10. Sicherheitsmodul (100) nach einem der voranstehenden Ansprüche, wobei das Sicherheitsmodul (100) ferner mit einer Safe-Torque-Off-Funktion (125) der Antriebseinheit (109) verbindbar ist, und wobei das Sicherheitsmodul (100) eingerichtet ist, zum Bewirken eines Stopps des Betriebs der Motoreinheit (113) durch die Sicherheitslogik (105) an die Safe-Torque-Off-Funktion (125) der Antriebseinheit (109) eine entsprechende Safe-Torque-Off-Nachricht auszusenden und die Safe-Torque-Off-Funktion (125) zu veranlassen, den Betrieb der Motoreinheit (113) zu unterbrechen.

11. Sicherheitsmodul (100) nach einem der voranstehenden Ansprüche, wobei das Sicherheitsmodul (100) ferner mit einem Abschaltmechanismus (129) verbindbar ist, der in eine Steuerverbindung (119) zwischen der Antriebseinheit (109) und der Motoreinheit (113) integriert ist, und wobei das Sicherheitsmodul (100) eingerichtet ist, zum Bewirken eines Stopps des Betriebs der Motoreinheit (113) durch die Sicherheitslogik (105) den Abschaltmechanismus (129) auszulösen, und wobei der Abschaltmechanismus (129) eingerichtet ist, die Steuerverbindung (119) zu unterbrechen.

12. Sicherheitsmodul (100) nach einem der voranstehenden Ansprüche, wobei das Sicherheitsmodul (100) mit einer weiteren Encoder-Einheit (112) des Antriebssystems (107) verbindbar ist, und wobei das Sicherheitsmodul (100) eingerichtet ist:
von einem weiteren Encoder-Protokollslave (118) der weiteren Encoder-Einheit (112) an den Antriebsprotokollmaster (115) der Antriebseinheit (109) auf Basis des Encoder-Protokolls in entsprechenden Datenpaketen ausgesendete weitere Encoder-Daten mittels des Protokollmasters (101) zu empfangen;
die empfangenen weiteren Encoder-Daten vom Protokollmaster (101) an die Sicherheitslogik (105) weiterzuleiten;
die weitergeleiteten Encoder-Daten der Encoder-Einheit (111) unter Berücksichtigung der weitergeleiteten weiteren Encoder-Daten der weiteren Encoder-Einheit (112) durch die Sicherheitslogik (105) auf Übereinstimmung mit den vorbestimmten Sicherheitskriterien zu überprüfen; und
einen Stopp des Betriebs der Motoreinheit (113) durch die Sicherheitslogik (105) zu bewirken, falls durch die Sicherheitslogik (105) die Encoder-Daten unter Berücksichtigung der weiteren Encoder-Daten als nicht mit den vorbestimmten Sicherheitskriterien übereinstimmend erkannt wurden.

13. Sicherheitsmodul (100) nach einem der voranstehenden Ansprüche, wobei die Encoder-Daten und/oder die weiteren Encoder-Daten Positionsdaten und/oder Parameterdaten der Motoreinheit (113) umfassen, wobei die Positionsdaten wenigstens eine Position der Motoreinheit (113) beschreiben, und wobei die Parameterdaten wenigstens einen von der Position verschiedenen Parameter der Motoreinheit (113) beschreiben, der eine Statusbeurteilung der Motoreinheit (113) ermöglicht.

14. Sicherheitsmodul (100) nach einem der voranstehenden Ansprüche, wobei die Sicherheitskriterien eine maximale Position und/oder eine maximale Geschwindigkeit und/oder eine maximale Beschleunigung und/oder eine maximale Temperatur der Motoreinheit (113) umfassen.

15. Antriebssystem (107) mit wenigstens einer Antriebseinheit (109), einer Encoder-Einheit (111), einer Motoreinheit (113) und einem Sicherheitsmodul (100) nach einem der voranstehenden Ansprüche 1 bis 14, wobei die Antriebseinheit (109) und die Encoder-Einheit (111) über eine Datenverbindung miteinander verbunden sind und eingerichtet sind, über einen Austausch von Datenpaketen gemäß einem Encoder-Protokoll zu kommunizieren, wobei das Sicherheitsmodul (100) über die Datenverbindung mit der Antriebseinheit (109) und der Encoder-Einheit (111) verbunden ist, und wobei die Antriebseinheit (109) zum Ansteuern der Motoreinheit (113) über eine Steuerverbindung (119) mit der Motoreinheit (113) verbunden ist.

## Claims

1. Safety module (100) for protected drive control of a drive system (107) in an automation system (200), wherein the drive system has at least one drive unit (109), an encoder unit (111) and a motor unit (113), wherein the safety module (100) can be integrated between the drive unit (109) and the encoder unit (111) and can be connected thereto via at least one data connection, wherein the safety module (100) has a protocol master (101), a protocol slave (103) and a safety logic unit (105) which are configured to communicate with one another by means of data communication, wherein the protocol master (101) is in the form of a master unit, and the protocol slave (103) is in the form of a slave unit, of an encoder protocol of an encoder interface (102), and wherein the safety module (100) is configured:
to use the protocol master (101) to receive encoder data transmitted on the basis of the encoder protocol from an encoder protocol slave (117) of the encoder unit (111) that is in the form of a slave unit of the encoder protocol to a drive protocol master (115) of the drive unit (109) that is in the form of a master unit of the encoder protocol;
to forward the received encoder data from the protocol master (101) to the safety logic unit (105) and to the protocol slave (103);
to use the safety logic unit (105) to check the forwarded encoder data for correspondence with predetermined safety criteria with regard to the operation of the motor unit (113);
to use the protocol slave (103) to transmit the forwarded encoder data in corresponding data packets to the drive protocol master (115) of the drive unit (109) on the basis of the encoder protocol; and
to cause the operation of the motor unit (113) to be stopped by the safety logic unit (105) if the safety logic unit (105) recognizes that the encoder data do not correspond to the predetermined safety criteria,
wherein the data communication between the encoder protocol slave (117) of the encoder unit (111) and
the protocol master (101) of the safety module (100) and between the protocol slave (103) of the safety module (100) and the drive protocol master (115) of the drive unit (109) is similar to data communication between the encoder protocol slave (117) of the encoder unit (111) and the drive protocol master (115) of the drive unit (109).

2. Safety module (100) according to Claim 1, wherein the safety module (100) is also configured to use the protocol master (101) to transmit requests for the transmission of encoder data to the encoder protocol slave (117) of the encoder unit (111).

3. Safety module (100) according to one of the preceding claims, wherein the safety module (100) is also configured to use the protocol slave (103) to receive requests for the transmission of encoder data which are transmitted by the drive protocol master (115) of the drive unit (109) to the encoder protocol slave (117) of the encoder unit (111); and to use the protocol slave (103) to transmit encoder data corresponding to the requests to the drive protocol master (115) of the drive unit (109).

4. Safety module (100) according to one of the preceding claims, also comprising an encoder emulator (135), wherein the encoder emulator (135) is configured to generate simulated encoder data, and wherein the simulated encoder data correspond to a simulation of the encoder data from the encoder unit (111).

5. Safety module (100) according to one of the preceding claims, wherein the safety module (100) also comprises a storage unit, and wherein the safety module (100) is also configured to store encoder data from the encoder unit (111) and/or simulated encoder data from the encoder emulator (135), which are received by the protocol master (101), in the storage unit.

6. Safety module (100) according to Claim 3, 4 or 5, wherein the encoder data transmitted by the protocol slave (103) in a manner corresponding to the requests are stored in the storage unit, and/or wherein the encoder data transmitted in a manner corresponding to the requests are simulated encoder data from the encoder emulator (135).

7. Safety module (100) according to one of the preceding claims, wherein the safety module (100) is also configured to use the protocol slave (103) to forward the received requests for the transmission of encoder data to the protocol master (101), and
to use the protocol master (101) to transmit the forwarded requests to the encoder protocol slave (117) of the encoder unit (111).

8. Safety module (100) according to Claim 7, wherein the safety module (100) can also be synchronized with the drive unit (109), and wherein the safety module (100) is configured, in sync with the transmission of requests for the transmission of encoder data by the drive unit (109), to transmit corresponding requests to the encoder protocol slave (117) of the encoder unit (111) by means of the protocol master (101).

9. Safety module (100) according to one of the preceding claims, wherein the safety module (100) can also be connected to the drive unit (109) via a data bus connection (121), and wherein the safety module (100) is configured, in order to cause the operation of the motor unit (113) to be stopped by the safety logic unit (105), to transmit a corresponding operation stop message to the drive unit (109) on the basis of a safety-relevant data packet according to a secure data bus protocol of the data bus connection (121).

10. Safety module (100) according to one of the preceding claims, wherein the safety module (100) can also be connected to a safe-torque-off function (125) of the drive unit (109), and wherein the safety module (100) is configured, in order to cause the operation of the motor unit (113) to be stopped by the safety logic unit (105), to transmit a corresponding safe-torque-off message to the safe-torque-off function (125) of the drive unit (109) and to prompt the safe-torque-off function (125) to interrupt the operation of the motor unit (113).

11. Safety module (100) according to one of the preceding claims, wherein the safety module (100) can also be connected to a disconnection mechanism (129) which is integrated in a control connection (119) between the drive unit (109) and the motor unit (113), and wherein the safety module (100) is configured, in order to cause the operation of the motor unit (113) to be stopped by the safety logic unit (105), to trigger the disconnection mechanism (129), and wherein the disconnection mechanism (129) is configured to interrupt the control connection (119) .

12. Safety module (100) according to one of the preceding claims, wherein the safety module (100) can be connected to a further encoder unit (112) of the drive system (107), and wherein the safety module (100) is configured:
to use the protocol master (101) to receive further encoder data transmitted in corresponding data packets on the basis of the encoder protocol from a further encoder protocol slave (118) of the further encoder unit (112) to the drive protocol master (115) of the drive unit (109);
to forward the received further encoder data from the protocol master (101) to the safety logic unit (105) ;
to use the safety logic unit (105) to check the forwarded encoder data from the encoder unit (111) for correspondence with the predetermined safety criteria, taking into account the forwarded further encoder data from the further encoder unit (112); and
to cause the operation of the motor unit (113) to be stopped by the safety logic unit (105) if the safety logic unit (105) has recognized that the encoder data do not correspond to the predetermined safety criteria, taking into account the further encoder data.

13. Safety module (100) according to one of the preceding claims, wherein the encoder data and/or the further encoder data comprise position data and/or parameter data relating to the motor unit (113), wherein the position data describe at least one position of the motor unit (113), and wherein the parameter data describe at least one parameter of the motor unit (113) that differs from the position and makes it possible to assess a status of the motor unit (113).

14. Safety module (100) according to one of the preceding claims, wherein the safety criteria comprise a maximum position and/or a maximum speed and/or a maximum acceleration and/or a maximum temperature of the motor unit (113).

15. Drive system (107) having at least one drive unit (109), an encoder unit (111), a motor unit (113) and a safety module (100) according to one of the preceding Claims 1 to 14, wherein the drive unit (109) and the encoder unit (111) are connected to one another via a data connection and are configured to communicate by interchanging data packets according to an encoder protocol, wherein the safety module (100) is connected to the drive unit (109) and to the encoder unit (111) via the data connection, and wherein the drive unit (109) is connected to the motor unit (113) via a control connection (119) for the purpose of controlling the motor unit (113).

## Revendications

1. Module de sécurité (100) pour une commande d'entraînement sûre d'un système d'entraînement (107) dans un système d'automatisation (200), dans lequel le système d'entraînement présente au moins une unité d'entraînement (109), une unité de codeur (111) et une unité de moteur (113), dans lequel le module de sécurité (100) peut être intégré entre l'unité d'entraînement (109) et l'unité de codeur (111) et peut être relié à celles-ci par au moins une liaison de données, dans lequel le module de sécurité (100) présente un maître de protocole (101), un esclave de protocole (103) et une logique de sécurité (105) qui sont conçus pour communiquer entre eux au moyen d'une communication de données, dans lequel le maître de protocole (101) est réalisé comme une unité maître et l'esclave de protocole (103) est réalisé comme une unité esclave d'un protocole de codeur d'une interface de codeur (102), et dans lequel le module de sécurité (100) est conçu pour :
recevoir des données de codeur envoyées par un esclave de protocole de codeur (117), réalisé comme une unité esclave du protocole de codeur, de l'unité de codeur (111) à un maître de protocole d'entraînement (115), réalisé comme une unité maître du protocole de codeur, de l'unité d'entraînement (109) sur la base du protocole de codeur, au moyen du maître de protocole (101) ;
retransmettre les données de codeur reçues du maître de protocole (101) à la logique de sécurité (105) et à l'esclave de protocole (103) ;
vérifier les données de codeur retransmises par la logique de sécurité (105) quant à la conformité à des critères de sécurité prédéterminés concernant le fonctionnement de l'unité de moteur (113) ;
envoyer les données de codeur retransmises par l'esclave de protocole (103) sur la base du protocole de codeur dans des paquets de données correspondants au maître de protocole d'entraînement (115) de l'unité d'entraînement (109) ; et
provoquer un arrêt du fonctionnement de l'unité de moteur (113) par la logique de sécurité (105) si la logique de sécurité (105) identifie les données de codeur comme étant non-conformes aux critères de sécurité prédéterminés,
dans lequel la communication de données entre l'esclave de protocole de codeur (117) de l'unité de codeur (111) et le maître de protocole (101) du module de sécurité (100) et entre l'esclave de protocole (103) du module de sécurité (100) et le maître de protocole d'entraînement (115) de l'unité d'entraînement (109) est réalisée de manière analogue à une communication de données entre l'esclave de protocole de codeur (117) de l'unité de codeur (111) et le maître de protocole d'entraînement (115) de l'unité d'entraînement (109).

2. Module de sécurité (100) selon la revendication 1, dans lequel le module de sécurité (100) est en outre conçu pour envoyer par le maître de protocole (101) des demandes d'envoi de données de codeur à l'esclave de protocole de codeur (117) de l'unité de codeur (111).

3. Module de sécurité (100) selon l'une quelconque des revendications précédentes, dans lequel le module de sécurité (100) est conçu en outre pour recevoir des demandes d'envoi de données de codeur par l'esclave de protocole (103), envoyées par le maître de protocole d'entraînement (115) de l'unité d'entraînement (109) à l'esclave de protocole de codeur (117) de l'unité de codeur (111) ; et pour envoyer des données de codeur correspondant aux demandes, par l'esclave de protocole (103) au maître de protocole d'entraînement (115) de l'unité d'entraînement (109).

4. Module de sécurité (100) selon l'une quelconque des revendications précédentes, comprenant en outre un émulateur de codeur (135), l'émulateur de codeur (135) étant conçu pour générer des données de codeur simulées, et dans lequel les données de codeur simulées correspondent à une simulation des données de codeur de l'unité de codeur (111).

5. Module de sécurité (100) selon l'une quelconque des revendications précédentes, dans lequel le module de sécurité (100) comprend en outre une unité de mémoire, et dans lequel le module de sécurité (100) est en outre conçu pour mémoriser dans l'unité de mémoire des données de codeur de l'unité de codeur (111) et/ou des données de codeur simulées de l'émulateur de codeur (135), reçues par le maître de protocole (101).

6. Module de sécurité (100) selon la revendication 3, 4 ou 5,
dans lequel les données de codeur envoyées par l'esclave de protocole (103) selon les demandes sont mémorisées dans l'unité de mémoire, et/ou
dans lequel les données de codeur envoyées selon les demandes sont des données de codeur simulées de l'émulateur de codeur (135).

7. Module de sécurité (100) selon l'une quelconque des revendications précédentes, dans lequel le module de sécurité (100) est en outre conçu pour retransmettre les demandes d'envoi de données de codeur reçues par l'esclave de protocole (103) au maître de protocole (102), et pour envoyer les demandes retransmises par le maître de protocole (101) à l'esclave de codeur de protocole (117) de l'unité de codeur (111).

8. Module de sécurité (100) selon la revendication 7, dans lequel le module de sécurité (100) peut en outre être synchronisé avec l'unité d'entraînement (109), et dans lequel le module de sécurité (100) est conçu, de manière synchrone à l'envoi de demandes d'envoi de données de codeur par l'unité d'entraînement (109), pour envoyer des demandes correspondantes par le maître de protocole (101) à l'esclave de protocole de codeur (117) de l'unité de codeur (111).

9. Module de sécurité (100) selon l'une quelconque des revendications précédentes, dans lequel le module de sécurité (100) peut en outre être relié à l'unité d'entraînement (109) par une liaison de bus de données (121), et dans lequel, afin de provoquer un arrêt du fonctionnement de l'unité de moteur (113) par la logique de sécurité (105), le module de sécurité (100) est conçu pour envoyer à l'unité d'entraînement (109) un message d'arrêt de fonctionnement correspondant sur la base d'un paquet de données de sécurité selon un protocole de bus de données sûr de la liaison de bus de données (121).

10. Module de sécurité (100) selon l'une quelconque des revendications précédentes, dans lequel le module de sécurité (100) peut en outre être relié à une fonction d'absence sûre du couple (125) de l'unité d'entraînement (109), et dans lequel, afin de provoquer un arrêt du fonctionnement de l'unité de moteur (113) par la logique de sécurité (105), le module de sécurité (100) est conçu pour envoyer à la fonction d'absence sûre du couple (125) de l'unité d'entraînement (109) un message d'absence sûre du couple correspondant et pour amener la fonction d'absence sûre du couple (125) à interrompre le fonctionnement de l'unité de moteur (113) .

11. Module de sécurité (100) selon l'une quelconque des revendications précédentes, dans lequel le module de sécurité (100) peut en outre être relié à un mécanisme de coupure (129) qui est intégré dans une liaison de commande (119) entre l'unité d'entraînement (109) et l'unité de moteur (113), et dans lequel, afin de provoquer un arrêt du fonctionnement de l'unité de moteur (113) par la logique de sécurité (105), le module de sécurité (100) est conçu pour déclencher le mécanisme de coupure (129), et dans lequel le mécanisme de coupure (129) est conçu pour interrompre la liaison de commande (119).

12. Module de sécurité (100) selon l'une quelconque des revendications précédentes, dans lequel le module de sécurité (100) peut être relié à une unité de codeur supplémentaire (112) du système d'entraînement (107), et dans lequel le module de sécurité (100) est conçu pour :
recevoir, au moyen du maître de protocole (101), des données de codeur supplémentaires envoyées par un esclave de protocole de codeur supplémentaire (118) de l'unité de codeur supplémentaire (112) au maître de protocole d'entraînement (115) de l'unité d'entraînement (109) sur la base du protocole de codeur ;
retransmettre à la logique de sécurité (105) les données de codeur supplémentaires reçues du maître de protocole (101) ;
vérifier les données de codeur retransmises de l'unité de codeur (111) en tenant compte des données de codeur supplémentaires retransmises de l'unité de codeur supplémentaire (112) par la logique de sécurité (105) quant à la conformité à des critères de sécurité prédéterminés ; et
provoquer un arrêt du fonctionnement de l'unité de moteur (113) par la logique de sécurité (105) si la logique de sécurité (105) a identifié les données de codeur, en tenant compte des données de codeur supplémentaires, comme étant non-conformes aux critères de sécurité prédéterminés.

13. Module de sécurité (100) selon l'une quelconque des revendications précédentes, dans lequel les données de codeur et/ou les données de codeur supplémentaires comprennent des données de position et/ou des données de paramètre de l'unité de moteur (113), dans lequel les données de position décrivent au moins une position de l'unité de moteur (113), et dans lequel les données de paramètre décrivent au moins un autre paramètre que la position de l'unité de moteur (113) qui permet une évaluation d'état de l'unité de moteur (113).

14. Module de sécurité (100) selon l'une quelconque des revendications précédentes, dans lequel les critères de sécurité comprennent une position maximale et/ou une vitesse maximale et/ou une accélération maximale et/ou une température maximale de l'unité de moteur (113).

15. Système d'entraînement (107) comprenant au moins une unité d'entraînement (109), une unité de codeur (111), une unité de moteur (113) et un module de sécurité (100) selon l'une quelconque des revendications précédentes 1 à 14, dans lequel l'unité d'entraînement (109) et l'unité de codeur (111) sont reliées l'une à l'autre par une liaison de données et sont conçues pour communiquer par un échange de paquets de données selon un protocole de codeur, dans lequel le module de sécurité (100) est relié par la liaison de données à l'unité d'entraînement (109) et à l'unité de codeur (111), et dans lequel l'unité d'entraînement (109) est reliée à l'unité de moteur (113) par l'intermédiaire d'une liaison de commande (119) pour le pilotage de l'unité de moteur (113).
